(19) **Europäisches Patentamt / European Patent Office / Office européen des brevets**

(11) **EP 4 660 590 A2**

(12) # EUROPEAN PATENT APPLICATION

(43) Date of publication:
**10.12.2025 Bulletin 2025/50**

(21) Application number: **25210207.4**

(22) Date of filing: **17.11.2020**

(51) International Patent Classification (IPC):
**G01D 5/48** $^{(2006.01)}$

(52) Cooperative Patent Classification (CPC):
**H04R 17/10; B06B 1/0677; G01N 29/2437;**
**G01N 2291/106**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.11.2019 US 201962936857 P**

(62) Document number(s) of the earlier application(s) in accordance with Art. 76 EPC:
**20889452.7 / 4 062 128**

(71) Applicant: **Resonant Acoustics International Inc.**
**Markham, ON L3R 5M1 (CA)**

(72) Inventors:
• CHAGGARES, Nicholas Chris
  Whitby, L1N 7B3 (CA)
• KALIAN, Varak
  York, M2K 3E7 (CA)
• RIEDER, Eric
  Georgetown, L7G 6G8 (CA)

(74) Representative: **Santarelli**
**Tour Trinity**
**1 bis Place de la Défense**
**92400 Courbevoie (FR)**

Remarks:
This application was filed on 21-10-2025 as a divisional application to the application mentioned under INID code 62.

(54) **ULTRASONIC TRANSDUCERS, BACKING STRUCTURES AND RELATED METHODS**

(57) There is provided an ultrasonic transducer having a sample-contacting portion and a back portion, the back portion being opposed to the sample contacting portion. The transducer includes a piezoelectric material configured to be in acoustic communication with a sample and a backing structure in acoustic communication with the piezoelectric material. The backing structure is configured to reflect acoustic energy towards the sample-contacting portion and away from the back portion of the ultrasonic transducer. The backing structure includes a low acoustic impedance layer and a high acoustic impedance layer. The transducer may also include a second dual layer de-matching backing. The second dual layer de-matching backing includes a second low acoustic impedance layer and a second high acoustic impedance layer. There are also provided ultrasonic transducers including a one-dimensional piezoelectric array or a two-dimensional piezoelectric matrix and including backing structure configured to reflect acoustic energy.

FIG. 1c

**Description**

**TECHNICAL FIELD**

The technical field generally relates to the field of acoustic energy and more particularly relates to an ultrasonic transducer, related devices, apparatuses methods and techniques.

**BACKGROUND**

Piezoelectric acoustic transducers are widely used in many industries and for a broad variety of applications. For example, piezoelectric ultrasonic transducers can be employed in medical applications, for example diagnostic imaging and/or therapeutic applications. Other applications include but are not limited to ultrasonic non-destructive testing and ultrasonic machining and welding. Piezoelectric ultrasonic transducers change electrical energy into mechanical energy, and reciprocally convert acoustic waves into electrical signal(s).

There is still a need for techniques, apparatus, devices and methods that alleviate or mitigate the problems of prior art.

**SUMMARY**

In accordance with one aspect, there is provided an ultrasonic transducer, including:

a piezoelectric material having a front surface and a back surface, the piezoelectric material being configured to be in acoustic communication with a sample;

a backing structure positioned at the back surface of the piezoelectric material and configured to reflect acoustic energy towards the front surface of the piezoelectric material, the backing structure being thermally conductive and electrically conductive, the backing structure including:

a first dual layer de-matching backing, the first dual layer de-matching backing including:

a first layer of graphite; and

a layer made of tungsten in contact with the first layer of graphite;

a second dual layer de-matching backing contacting the first dual layer de-matching backing, the second dual layer de-matching backing including:

a second layer of graphite; and
a layer of copper in contact with the second layer of graphite;

a heat sink in thermal contact with the backing structure; and

one or more electrodes in electrical communication with the piezoelectric material.

In some embodiments, the heat sink includes at least one channel, the channel being configured for receiving and circulating a heat transfer fluid therein.
In some embodiments, the heat transfer fluid is a liquid.
In some embodiments, the heat sink is electrically insulated from the backing structure.
In some embodiments, the ultrasonic transducer is operable at an operational frequency, the operational frequency being related to an operational wavelength ($\lambda_o$); and the layer of graphite, the layer made of tungsten in contact with the first layer of graphite, the second layer of graphite and the layer of copper each have a corresponding thickness of about $\lambda_o/4$ thick or odd multiples of $\lambda_o/4$.
In some embodiments, the piezoelectric material is configured to be half wave resonant at the operational frequency.
In some embodiments, the ultrasonic transducer includes a single de-matching layer positioned between the piezoelectric material and the backing structure, the single de-matching layer being in acoustic communication with the piezoelectric material and the backing structure, the single de-matching layer having a corresponding acoustic impedance relatively higher than an acoustic impedance of the piezoelectric material, wherein the piezoelectric material is configured to be quarter wave resonant at the operational frequency .

In some embodiments, the piezoelectric material has a resonant frequency, the resonant frequency being related to a resonant wavelength $\lambda_r$, the single de-matching layer having a thickness of less than $2\lambda_r/5$ thick with respect to the resonant frequency of the piezoelectric material.

In some embodiments, the single de-matching layer has a thickness ranging between about $\lambda_r/10$ and about $\lambda_r/20$.

In some embodiments, the single de-matching layer is made from tungsten.

In some embodiments, the piezoelectric material has acousting properties including an acoustic impedance of about 27.5 MegaRayls.

In some embodiments, the first layer of graphite has an acoustic impedance of about 5.1 MegaRayls.

In some embodiments, the first layer of graphite has a thickness included in a range extending from about 1.5 mm to about 1.6 mm.

In some embodiments, the layer of tungsten has an acoustic impedance of about 100 MegaRayls.

In some embodiments, the layer of tungsten has a thickness included in a range extending from about 2.6 mm to about 2.7 mm.

In some embodiments, the second layer of graphite has an acoustic impedance of about 5.1 MegaRayls.

In some embodiments, the second layer of graphite has a thickness included in a range extending from about 1.5 mm to about 1.6 mm.

In some embodiments, the layer of copper has an acoustic impedance of about 41.5 MegaRayls.

In some embodiments, the layer of copper has a thickness included in a range extending from about 2.5 mm to about 2.6 mm.

In some embodiments, the piezoelectric material is a poled composite piezoelectric disc.

In some embodiments, the poled composite piezoelectric disc is in a 1 3 configuration.

In some embodiments, the piezoelectric material is a composite of PZT4, the piezoelectric material including 1000 um by 1000 um pillars separated by 200 um kerfs, the kerfs being cut at a pitch of about 1200 um.

In some embodiments, the piezoelectric material has a thickness included in a range extending from about 2.35 mm to about 2.45 mm.

In some embodiments, the kerfs are filled with a composite filler, the composite filler including particles of hafnium dioxide doped into epoxy.

In some embodiments, the composite filler is in a 0 3 configuration.

In some embodiments, the epoxy is Epo-Tek® 301.

In some embodiments, the piezoelectric material consists of a piezoelectric layer.

In some embodiments, the ultrasonic transducer includes a thermally conductive structure in contact with the backing structure.

In some embodiments, the thermally conductive structure is electrically insulated from the backing structure.

In some embodiments, the thermally conductive structure is a layer made of AlN or a layer made of beryllium oxide.

In some embodiments, the thermally conductive structure extends on lateral portions of the backing structure.

In some embodiments, the thermally conductive structure includes at least one electrically conductive via passing through the thermally conductive structure.

In some embodiments, the ultrasonic transducer includes a control unit electrically connected to at least one of the piezoelectric material, the backing structure and the one or more electrodes.

In some embodiments, the one or more electrodes are electrically connected to the piezoelectric material through the backing structure.

In some embodiments, the ultrasonic transducer includes a wear layer having abrasion-resistant properties.

In some embodiments, the wear layer is made from titanium.

In some embodiments, the ultrasonic transducer has a diameter of about 50 mm.

In some embodiments, the backing structure is further configured to reflect the acoustic energy in phase.

In some embodiments, the backing structure is further configured to spatially and temporally disperse unwanted acoustic reverberations in the backing structure.

In accordance with one aspect, there is provided an ultrasonic transducer, including:

a piezoelectric material having a front surface and a back surface, the piezoelectric material being configured to be in acoustic communication with a sample; and

a backing structure positioned at the back surface of the piezoelectric material and configured to reflect acoustic energy towards the front surface of the piezoelectric material, the backing structure including:

a first dual layer de-matching backing, the first dual layer de-matching backing including a first low acoustic impedance layer and a first high acoustic impedance layer; and

a second dual layer de-matching backing connected to the first dual layer de-matching backing, the second dual layer de-matching backing including a second low acoustic impedance layer and a second high acoustic impedance layer.

In some embodiments, the ultrasonic transducer includes at least one of a heat sink in thermal contact with the backing structure or a thermally conductive layer acoustically matched with the piezoelectric material.

In some embodiments, the ultrasonic transducer includes one or more electrodes in electrical communication with the piezoelectric material.

In some embodiments, the backing structure is thermally conductive and electrically conductive.

In some embodiments, the ultrasonic transducer includes a pre-assembled electrical circuit, the pre-assembled electrical circuit being in electrical communication with a top portion of the backing structure, such that it is in electrical communication with the piezoelectric material.

In some embodiments, the pre-assembled electrical circuit includes at least one of: a printed circuit board, an interposer, an integrated circuit and an application-specific integrated circuit.

In some embodiments, the heat sink includes at least one channel, the channel being configured for receiving and circulating a heat transfer fluid therein.

In some embodiments, the heat transfer fluid is a liquid.

In some embodiments, the heat sink is electrically insulated from the backing structure.

In some embodiments, the ultrasonic transducer is operable at an operational frequency, the operational frequency being related to an operational wavelength ($\lambda_o$); and the first low acoustic impedance layer, the first high acoustic impedance layer, the second low acoustic impedance layer and the second high acoustic impedance layer each have a corresponding thickness of about $\lambda_o/4$ thick or odd multiples of $\lambda_o/4$.

In some embodiments, the piezoelectric material is configured to be half wave resonant at the operational frequency.

In some embodiments, the ultrasonic transducer includes a single de-matching layer positioned between the piezoelectric material and the backing structure, the single de-matching layer being in acoustic communication with the piezoelectric material and the backing structure, the single de-matching layer having a corresponding acoustic impedance relatively higher than an acoustic impedance of the piezoelectric material, wherein the piezoelectric material is configured to be quarter wave resonant at the operational frequency .

In some embodiments, the piezoelectric material has a resonant frequency, the resonant frequency being related to a resonant wavelength $\lambda_r$, the single de-matching layer having a thickness of less than $2\lambda_r/5$ thick with respect to the resonant frequency of the piezoelectric material.

In some embodiments, the single de-matching layer has a thickness ranging between about $\lambda_r/10$ and about $\lambda_r/20$.

In some embodiments, the single de-matching layer is made from tungsten.

In some embodiments, the piezoelectric material has acoustic properties including an acoustic impedance of about 27.5 MegaRayls.

In some embodiments, the piezoelectric material is a poled composite piezoelectric disc.

In some embodiments, the poled composite piezoelectric disc has a thickness of about 2.4 mm.

In some embodiments, the poled composite piezoelectric disc is in a 1 3 configuration.

In some embodiments, the piezoelectric material is a composite of PZT4, the piezoelectric material including 1000 um by 1000 um pillars separated by 200 um kerfs, the kerfs being cut at a pitch of about 1200 um.

In some embodiments, the kerfs are filled with a composite filler, the composite filler including particles of hafnium dioxide doped into epoxy.

In some embodiments, the composite filler is in a 0 3 configuration.

In some embodiments, the epoxy is Epo-Tek® 301.

In some embodiments, the piezoelectric material consists of a piezoelectric layer.

In some embodiments, the ultrasonic transducer includes a thermally conductive structure in contact with the backing structure.

In some embodiments, the thermally conductive structure is electrically insulated from the backing structure.

In some embodiments, the thermally conductive structure is a layer made of AlN or a layer made of beryllium oxide.

In some embodiments, the thermally conductive structure extends on lateral portions of the backing structure.

In some embodiments, the thermally conductive structure includes at least one electrically conductive via passing through the thermally conductive structure.

In some embodiments, the ultrasonic transducer includes a control unit electrically connected to at least one of the piezoelectric material and the backing structure.

In some embodiments, the one or more electrodes are electrically connected to the piezoelectric material through the backing structure.

In some embodiments, the ultrasonic transducer includes a wear layer having abrasion-resistant properties.

In some embodiments, the wear layer is made from titanium.

In some embodiments, the ultrasonic transducer has a diameter of about 50 mm.

In some embodiments, the backing structure is further configured to reflect the acoustic energy in phase.

In some embodiments, the backing structure is further configured to spatially and temporally disperse unwanted acoustic reverberations in the backing structure.

In accordance with one aspect, there is provided an ultrasonic transducer having a sample-contacting portion and a back portion, the back portion being opposed to the sample contacting portion, including:

a piezoelectric material configured to be in acoustic communication with a sample; and

a backing structure in acoustic communication with the piezoelectric material, the backing structure being configured to reflect acoustic energy towards the sample-contacting portion and away from the back portion of the ultrasonic transducer, the backing structure including:

a low acoustic impedance layer; and

a high acoustic impedance layer.

In some embodiments, the low acoustic impedance layer and the high acoustic impedance layer form a first dual layer de-matching backing, and the ultrasonic transducer the ultrasonic transducer includes a second dual layer de-matching backing, the second dual layer de-matching backing including a second low acoustic impedance layer and a second high acoustic impedance layer.

In some embodiments, the ultrasonic transducer includes a heat sink in thermal contact with the backing structure.

In some embodiments, the ultrasonic transducer includes one or more electrodes in electrical communication with the piezoelectric material.

In some embodiments, the backing structure is thermally conductive and electrically conductive.

In some embodiments, the ultrasonic transducer includes a pre-assembled electrical circuit, the pre-assembled electrical circuit being in electrical communication with a top portion of the backing structure, such that it is in electrical communication with the piezoelectric material.

In some embodiments, the pre-assembled electrical circuit includes at least one of: a printed circuit board, an interposer, an integrated circuit and an application-specific integrated circuit.

In some embodiments, the heat sink includes at least one channel, the channel being configured for receiving and circulating a heat transfer fluid therein.

In some embodiments, the heat transfer fluid is a liquid.

In some embodiments, the heat sink is electrically insulated from the backing structure.

In some embodiments, the ultrasonic transducer is operable at an operational frequency, the operational frequency being related to an operational wavelength ($\lambda_o$); and the low acoustic impedance layer, the high acoustic impedance layer, the second low acoustic impedance layer and the second high acoustic impedance layer each have a corresponding thickness of about $\lambda_o/4$ thick or odd multiples of $\lambda_o/4$.

In some embodiments, the piezoelectric material is configured to be half wave resonant at the operational frequency.

In some embodiments, the ultrasonic transducer includes a single de-matching layer positioned between the piezoelectric material and the backing structure, the single de-matching layer being in acoustic communication with the piezoelectric material and the backing structure, the single de-matching layer having a corresponding acoustic impedance relatively higher than an acoustic impedance of the piezoelectric material, wherein the piezoelectric material is configured to be quarter wave resonant at the operational frequency .

In some embodiments, the piezoelectric material has a resonant frequency, the resonant frequency being related to a resonant wavelength $\lambda_r$, the single de-matching layer having a thickness of less than $2\lambda_r/5$ thick with respect to the resonant frequency of the piezoelectric material.

In some embodiments, the single de-matching layer has a thickness ranging between about $\lambda_r/10$ and about $\lambda_r/20$.

In some embodiments, the single de-matching layer is made from tungsten.

In some embodiments, the piezoelectric material has acoustic properties including an acoustic impedance of about 27.5 MegaRayls.

In some embodiments, the piezoelectric material is a poled composite piezoelectric disc.

In some embodiments, the poled composite piezoelectric disc has a thickness of about 2.4 mm.

In some embodiments, the poled composite piezoelectric disc is in a 1 3 configuration.

In some embodiments, the piezoelectric material is PZT4, the piezoelectric material including 1000 um by 1000 um pillars separated by 200 um kerfs, the kerfs being cut at a pitch of about 1200 um.

In some embodiments, the kerfs are filled with a composite filler, the composite filler including particles of hafnium dioxide doped into epoxy.

In some embodiments, the composite filler is in a 0 3 configuration.

In some embodiments, the epoxy is Epo-Tek® 301.

In some embodiments, the piezoelectric material consists of a piezoelectric layer.

In some embodiments, the ultrasonic transducer includes a thermally conductive structure in contact with the backing structure.

In some embodiments, the thermally conductive structure is electrically insulated from the backing structure.

In some embodiments, the thermally conductive structure is a layer made of AlN or a layer made of beryllium oxide.

In some embodiments, the thermally conductive structure extends on lateral portions of the backing structure.

In some embodiments, the thermally conductive structure includes at least one electrically conductive via passing through the thermally conductive structure.

In some embodiments, the ultrasonic transducer includes a control unit electrically connected to at least one of the piezoelectric material and the backing structure.

In some embodiments, the one or more electrodes are electrically connected to the piezoelectric material through the backing structure.

In some embodiments, the ultrasonic transducer includes a wear layer having abrasion-resistant properties.

In some embodiments, the wear layer is made from titanium.

In some embodiments, the ultrasonic transducer has a diameter of about 50 mm.

In some embodiments, the backing structure is further configured to reflect the acoustic energy in phase.

In some embodiments, the backing structure is further configured to spatially and temporally disperse unwanted acoustic reverberations in the backing structure.

In some embodiments, the piezoelectric material is diced into a plurality of piezoelectric regions, separated one from another by gaps, the gaps being electrically insulating and acoustically insulating; at least one of the low acoustic impedance layer and the high acoustic impedance layer is diced into a first plurality of elements, separated one from another by a first set of gaps, each of the first set of gaps being aligned with a corresponding one of the gaps separating the piezoelectric regions, the first set of gaps being electrically insulating and acoustically insulating; and at least one of the second low acoustic impedance layer and the second high acoustic impedance layer is diced into a second plurality of elements, separated one from another by a second set of gaps, each of the second set of gaps being aligned with a corresponding one of the gaps separating the piezoelectric regions, the second set of gaps being electrically insulating and acoustically insulating.

In some embodiments, the gaps, the first set of gaps and the second set of gaps are thermally conductive.

In accordance with one aspect, there is provided an ultrasonic transducer, including:

a one-dimensional piezoelectric array having a front surface and a back surface, the one-dimensional piezoelectric array being configured to be in acoustic communication with a sample and including a plurality of piezoelectric regions arrayed in one dimension;

a backing structure positioned at the back surface of the one-dimensional piezoelectric array and configured to reflect acoustic energy towards the front surface of the one-dimensional piezoelectric array, the backing structure including a dual layer de-matching backing, the dual layer de-matching backing including a low acoustic impedance layer and a high acoustic impedance layer; and

a pre-assembled electrical circuit, the pre-assembled electrical circuit being in electrical communication with a top portion of the backing structure, such that it is in electrical communication with the one-dimensional piezoelectric array.

In some embodiments, the ultrasonic transducer includes a second dual layer de-matching backing, the second dual layer de-matching backing including a second low acoustic impedance layer and a second high acoustic impedance layer.

In some embodiments, the ultrasonic transducer includes a heat sink in thermal contact with the backing structure.

In some embodiments, the ultrasonic transducer includes one or more electrodes in electrical communication with the one-dimensional piezoelectric array.

In some embodiments, the backing structure is thermally conductive and electrically conductive.

In some embodiments, the pre-assembled electrical circuit includes at least one of: a printed circuit board, an interposer, an integrated circuit and an application-specific integrated circuit.

In some embodiments, each piezoelectric region is separated one from another by gaps, the gaps being electrically insulating and acoustically insulating.

In some embodiments, at least one of the low acoustic impedance layer and the high acoustic impedance layer is diced into a first plurality of elements, separated one from another by a first set of gaps, each of the first set of gaps being aligned with a corresponding one of the gaps separating the piezoelectric regions, the first set of gaps being electrically insulating and acoustically insulating

In some embodiments, at least one of the second low acoustic impedance layer and the second high acoustic impedance layer is diced into a second plurality of elements, separated one from another by a second set of gaps, each of the second set of gaps being aligned with a corresponding one of the gaps separating the piezoelectric regions, the second set of gaps being electrically insulating and acoustically insulating.

In some embodiments, the gaps, the first set of gaps and the second set of gaps are thermally conductive.

In some embodiments, the top portion of the backing structure is made from an electrically insulating material.

In some embodiments, wherein the electrically insulating material is thermally conductive.

In some embodiments, the top portion includes a layer made from AlN traversed by electrically conductive vias, each electrically conductive via being aligned to a corresponding one of the plurality of piezoelectric regions arrayed in one dimension.

In some embodiments, the layer made from AlN layer has a front face, the layer made from AlN layer being partially diced from the front face to enhance acoustic separation of adjacent ones of the plurality of piezoelectric regions arrayed in one dimension.

In some embodiments, the heat sink includes at least one channel, the channel being configured for receiving and circulating a heat transfer fluid therein.

In some embodiments, the heat transfer fluid is a liquid.

In some embodiments, the heat sink is electrically insulated from the backing structure.

In some embodiments, the ultrasonic transducer is operable at an operational frequency, the operational frequency being related to an operational wavelength ($\lambda_o$); and the low acoustic impedance layer, the high acoustic impedance layer, the second low acoustic impedance layer and the second high acoustic impedance layer each have a corresponding thickness of about $\lambda_o/4$ thick or odd multiples of $\lambda_o/4$.

In some embodiments, the one-dimensional piezoelectric array is configured to be half wave resonant at the operational frequency.

In some embodiments, the ultrasonic transducer includes a single de-matching layer positioned between the one-dimensional piezoelectric array and the backing structure, the single de-matching layer being in acoustic communication with the one-dimensional piezoelectric array and the backing structure, the single de-matching layer having a corresponding acoustic impedance relatively higher than an acoustic impedance of the one-dimensional piezoelectric array, wherein the one-dimensional piezoelectric array is configured to be quarter wave resonant at the operational frequency .

In some embodiments, the one-dimensional piezoelectric array has a resonant frequency, the resonant frequency being related to a resonant wavelength $\lambda_r$, the single de-matching layer having a thickness of less than $2\lambda_r/5$ thick with respect to the resonant frequency of the one-dimensional piezoelectric array.

In some embodiments, the single de-matching layer has a thickness ranging between about $\lambda_r/10$ and about $\lambda_r/20$.

In some embodiments, the single de-matching layer is made from tungsten.

In some embodiments, the piezoelectric regions include pillars separated by kerfs.

In some embodiments, the kerfs are filled with a composite filler, the composite filler including particles of hafnium dioxide doped into epoxy.

In some embodiments, the composite filler is in a 0 3 configuration.

In some embodiments, the epoxy is Epo-Tek® 301.

In some embodiments, the piezoelectric regions consist of a piezoelectric layer.

In some embodiments, the ultrasonic transducer includes a thermally conductive structure in contact with the backing structure.

In some embodiments, the thermally conductive structure is electrically insulated from the backing structure.

In some embodiments, the thermally conductive structure is a layer made of AlN or a layer made of beryllium oxide.

In some embodiments, the thermally conductive structure extends on lateral portions of the backing structure.

In some embodiments, the ultrasonic transducer includes a control unit electrically connected to at least one of the one-dimensional piezoelectric array and the backing structure.

In some embodiments, the one or more electrodes are electrically connected to the one-dimensional piezoelectric array through the backing structure.

In some embodiments, the ultrasonic transducer includes a wear layer having abrasion-resistant properties.

In some embodiments, the wear layer is made from titanium.

In some embodiments, the ultrasonic transducer has a diameter of about 50 mm.

In some embodiments, the backing structure is further configured to reflect the acoustic energy in phase.

In some embodiments, the backing structure is further configured to spatially and temporally disperse unwanted acoustic reverberations in the backing structure.

In accordance with one aspect, there is provided an ultrasonic transducer, including:

a two-dimensional piezoelectric matrix having a front surface and a back surface, the two-dimensional piezoelectric matrix being configured to be in acoustic communication with a sample;

a backing structure positioned at the back surface of the one-dimensional piezoelectric matrix and configured to reflect acoustic energy towards the front surface of the two-dimensional piezoelectric matrix, the backing structure including a dual layer de-matching backing, the dual layer de-matching backing including a low acoustic impedance layer and a high acoustic impedance layer; and

a pre-assembled electrical circuit, the pre-assembled electrical circuit being in electrical communication with a top portion of the backing structure, such that it is in electrical communication with the two-dimensional piezoelectric matrix.

In some embodiments, the ultrasonic transducer includes a second dual layer de-matching backing, the second dual layer de-matching backing including a second low acoustic impedance layer and a second high acoustic impedance layer.

In some embodiments, the ultrasonic transducer includes a heat sink in thermal contact with the backing structure.

In some embodiments, the ultrasonic transducer includes one or more electrodes in electrical communication with the two-dimensional piezoelectric matrix.

In some embodiments, the backing structure is thermally conductive and electrically conductive.

In some embodiments, the pre-assembled electrical circuit includes at least one of: a printed circuit board, an interposer, an integrated circuit and an application-specific integrated circuit.

In some embodiments, the two-dimensional piezoelectric matric includes a plurality of piezoelectric regions, each piezoelectric region being separated one from another by gaps, the gaps being electrically insulating and acoustically insulating.

In some embodiments, at least one of the low acoustic impedance layer and the high acoustic impedance layer is diced into a first plurality of elements, separated one from another by a first set of gaps, each of the first set of gaps being aligned with a corresponding one of the gaps separating the piezoelectric regions, the first set of gaps being electrically insulating and acoustically insulating

In some embodiments, at least one of the second low acoustic impedance layer and the second high acoustic impedance layer is diced into a second plurality of elements, separated one from another by a second set of gaps, each of the second set of gaps being aligned with a corresponding one of the gaps separating the piezoelectric regions, the second set of gaps being electrically insulating and acoustically insulating.

In some embodiments, the gaps, the first set of gaps and the second set of gaps are thermally conductive.

In some embodiments, the top portion of the backing structure is made from an electrically insulating material.

In some embodiments, the electrically insulating material is thermally conductive.

In some embodiments, the top portion includes a layer made from AlN traversed by electrically conductive vias, each electrically conductive via being aligned to a corresponding one of the plurality of piezoelectric regions.

In some embodiments, the layer made from AlN layer has a front face, the layer made from AlN layer being partially diced from the front face to enhance acoustic separation of adjacent ones of the plurality of piezoelectric regions arrayed in one dimension.

In some embodiments, the heat sink includes at least one channel, the channel being configured for receiving and circulating a heat transfer fluid therein.

In some embodiments, the heat transfer fluid is a liquid.

In some embodiments, the heat sink is electrically insulated from the backing structure.

In some embodiments, the ultrasonic transducer is operable at an operational frequency, the operational frequency being related to an operational wavelength ($\lambda_o$); and the low acoustic impedance layer, the high acoustic impedance layer, the second low acoustic impedance layer and the second high acoustic impedance layer each have a corresponding thickness of about $\lambda_o/4$ thick or odd multiples of $\lambda_o/4$.

In some embodiments, the two-dimensional piezoelectric matrix is configured to be half wave resonant at the operational frequency.

In some embodiments, the ultrasonic transducer includes a single de-matching layer positioned between the two-dimensional piezoelectric matrix and the backing structure, the single de-matching layer being in acoustic communication with the two-dimensional piezoelectric matrix and the backing structure, the single de-matching layer having a corresponding acoustic impedance relatively higher than an acoustic impedance of the two-dimensional piezoelectric matrix, wherein the two-dimensional piezoelectric matrix is configured to be quarter wave resonant at the operational frequency .

In some embodiments, the two-dimensional piezoelectric matrix has a resonant frequency, the resonant frequency being related to a resonant wavelength $\lambda_r$, the single de-matching layer having a thickness of less than $2\lambda_r/5$ thick with respect to the resonant frequency of the two-dimensional piezoelectric matrix.

In some embodiments, the single de-matching layer has a thickness ranging between about $\lambda_r/10$ and about $\lambda_r/20$.

In some embodiments, the single de-matching layer is made from tungsten.

In some embodiments, the two-dimensional piezoelectric matrix includes pillars separated by kerfs.

In some embodiments, the kerfs are filled with a composite filler, the composite filler including particles of hafnium dioxide doped into epoxy.

In some embodiments, the composite filler is in a 0 3 configuration.

In some embodiments, the epoxy is Epo-Tek® 301.

In some embodiments, the two-dimensional piezoelectric matrix consists of a piezoelectric layer.

In some embodiments, the ultrasonic transducer includes a thermally conductive structure in contact with the backing structure.

In some embodiments, the thermally conductive structure is electrically insulated from the backing structure.

In some embodiments, the thermally conductive structure is a layer made of AlN or a layer made of beryllium oxide.

In some embodiments, the thermally conductive structure extends on lateral portions of the backing structure.

In some embodiments, the ultrasonic transducer includes a control unit electrically connected to at least one of the two-dimensional piezoelectric matrix and the backing structure.

In some embodiments, the one or more electrodes are electrically connected to the two-dimensional piezoelectric matrix through the backing structure.

In some embodiments, the ultrasonic transducer includes a wear layer having abrasion-resistant properties.

In some embodiments, the wear layer is made from titanium.

In some embodiments, the ultrasonic transducer has a diameter of about 50 mm.

In some embodiments, the backing structure is further configured to reflect the acoustic energy in phase.

In some embodiments, the backing structure is further configured to spatially and temporally disperse unwanted acoustic reverberations in the backing structure.

In accordance with another aspect, there is provided multi-layer ultrasound transducer backing structures. In some embodiments, the backing structures allow reflecting a significant portion and, in some instances virtually all acoustic energy out the front of the transducer. Such transducers are generally not affected by physical contact at the back of the backing stack.

In accordance with another aspect, there is provided a single element liquid cooled material specific transducer designed to match titanium. The transducer includes a de-matching structure, such as a dual layer de-matching backing (DLDB). The DLDB can be designed to operate on a 680 kHz piezoelectric transducer. The transducer can have a piezocomposite element of 27.5 MegaRayls (MR) acoustic impedance and includes a first DLDB pair bonded to a second DLDB pair, the first DLDB pair including a first layer of graphite having an acoustic impedance of approximately 5.1 (MR) and a thickness of 1.03 mm, and a second layer of tungsten metal having an acoustic impedance of approximately 100 MR and a thickness of 1.53mm, the second DLDB pair including of a first layer of graphite having an acoustic impedance of approximately 5.1 (MR) and a thickness of 0.905 mm, and a second layer of copper metal having an acoustic impedance of approximately 41.5 MR and a thickness of 1.71mm.

In some embodiments, the DLDB includes a first backing layer and a second backing layer, each having a distal face and a proximal face. The proximal face can be in acoustic contact with the distal face of the second backing layer. The DLDB can be placed in acoustic contact with a piezoelectric element having a distal and a proximal face, the distal face of the first backing layer being in contact with the proximal face of the piezoelectric element. The first and second backing layers of the DLDB can be designed to be about ¼ lambda thickness for the designed resonant frequency of the piezoelectric element. The first backing layer can be made from a material having a relatively lower acoustic impedance as compared to the piezoelectric element. The second backing layer can be made from a material having a relatively higher acoustic impedance compared to the first backing layer.

In some embodiments, the transducer comprises a 2.4 mm thick 1 3 poled composite piezoelectric disc, the thickness corresponding to about between 0.35 and 0.4 lambda, but operating in ½ lambda mode, having a positive electrode on the proximal face and negative electrode on the distal face. The thickness of the piezo electric disc can be chosen to be thinner than ½ lambda to compensate for the mass loading effect of the DLDB backing. The piezoelectric composite can be made by dicing and filling poled PZT4 material having 200 um kerfs cut at a pitch of 1200 um leaving 1000 um by 1000 um pillars separated by 200 um kerfs. The kerfs can be, for example and without being limitative, filled with a 0 3 composite filler of c.a. 5 um particles of hafnium dioxide doped into Epotek 301 epoxy, such that the acoustic impedance of the composite kerf filler material ranges between approximately 7 to 8 Mega Rayls (MR), and the acoustic impedance of the overall piezocomposite layer is closely matched to titanium being approximately 27.5 MR. The negative face of the piezoelectric composite layer can be bonded to the proximal face of a 6 mm thick disc of ZA-8 zinc-aluminum alloy, using, for example, a tungsten powder loaded epoxy. The distal face of the ZA-8 disc, can then be bonded to the proximal face of an alumina composite disc, using a submicron particle hafnium oxide loaded Epotek 301 epoxy. The alumina composite disc can include pillars of 750 um by 750 um by 1400 um height, separated by kerfs of 200 um, the kerfs being filled with the same hafnium particle loaded epoxy used to make the piezoelectric composite disc. The distal face of the alumina composite can be bonded in turn to the proximal face of a 3 mm thick disc of titanium, with a layer of submicron hafnium oxide loaded Epotek 301 epoxy. Two sets of dual layer de-matching backings (DLDB) can then be bonded to the proximal face of the piezoelectric disc using sub-micron tungsten powder loaded Epotek 301 epoxy as follows. The proximal face of the piezoelectric composite disc is bonded to the distal face of a 1030 um thick Poco DFP-1 graphite disc, having acoustic impedance of 5.1 MR, 905 um corresponding to ¼ lambda at 680 kHz, the centre frequency of the transducer. The proximal face of the graphite disc is then bonded to the distal face of a 1530 um thick tungsten disc, having acoustic impedance of 100 MR, the thickness of the tungsten disc corresponding to ¼ lambda at ~ 850 kHz, also slightly above the center frequency of the transducer. The proximal face of the tungsten disc is then bonded to the proximal face of a 905 um thick Poco DFP-1 graphite disc, having acoustic impedance of 5.1 MR, the thickness corresponding to ¼ lambda at ~800 kHz, slightly above the centre frequency of the transducer. The proximal face of the graphite disc is bonded to the distal face of a 1710 um thick copper disc, having acoustic impedance of 41.5 MR, the thickness corresponding to ¼ lambda at 680 kHz. The graphite disc, and tungsten disc, constitute the first dual-layer de-matching backing stack, and the graphite disc and copper disc constitute the second DLDB stack. These two stacks work together to acoustically isolate the piezoelectric composite disc from the thermal cooling elements of the transducer, allowing the thermal cooling solution to be directly bonded to the proximal face of the copper disc without substantially disrupting the acoustic performance of the transducer. In these embodiments, the distal face of a 1 mm thick highly thermally conductive AlN disc is bonded to the proximal face of the copper disc, using thermally conductive epoxy. The AlN disc is notched to allow space for electrical connection to the copper disc to be made with a soldered wire, or alternatively, a conductive epoxy bonded wire. It should be noted that the entire DLDB stack in this embodiment is both electrically and thermally conductive, making electrical connection to the signal electrode of the piezoelectric composite disc possible directly through the DLDB stacks. In addition, it should be noted that many materials exist that can be practically used in the application of the disclosed technology beyond those being explicitly described in this exemplary embodiment, some of which are electrically conductive, thermally conductive, or both, or neither thermally or electrically conductive. In this exemplary embodiment, the DLDB layers are all both electrically and thermally conductive. The proximal face of a copper heat sink base is brazed or soldered to the distal edge a heat-sink top, to form a hollow copper heat sink assembly, the distal face of which is directly bonded to the proximal face of the AlN disc, with thermally conductive but electrically insulating epoxy. In the illustrated embodiments, the proximal face of the hollow heat sink top is bonded with the same thermally conductive epoxy to the distal face of an AlN disc. The AlN disc has two clearance holes in it and a notch, the holes allowing for the cooling tubes, to be affixed to the integral barbed tubes of the heat sink top, and the notch allowing a clearance path for the signal wire attached to the copper DLDB layer. The proximal face of the AlN disc can be bonded to the distal face of the copper heat spreader using thermally conductive epoxy. The copper housing shell can be press fit onto the perimeter of ZA-8 disc and bonded to the complete acoustic and thermal stack using an electrically insulating and thermally conductive epoxy. In some embodiments, all the voids are filled with thermally conductive electrically insulating epoxy, thus making the entire assembly solid, apart from the hollow interior of the heatsink assembly *(i.e.,* heatsink top and heat sink bottom). Rubber hoses, which can have, for example and without being limitative, an inner diameter of 3/8 of an inch, are fitted to the top copper heatsink barbed hose bosses and fixed in place with hose clamps. The transducer includes an electrical contact, which can be embodied by a BNC RF electrical connector, soldered to the copper lid. The centre conductor of the BNC connector can further be soldered to the signal wire thus electrically connecting the BNC signal conductor to the positive signal electrode of the piezoelectric composite disc. The copper lid can, in some embodiments, be soldered or bonded with conductive epoxy to the proximal lip of the copper shell, completing the electrical connection from the ground of the BNC connector and the negative electrode of the piezoelectric composite disc via the copper shell and the ZA-8 disc. The transducer also includes an electrically insulating plastic housing, bonded to the copper lid and copper shell, at least partially covering the edge of the alumina composite disc and resting on the surface of titanium disc. The resulting transducer *(i.e.,* the assembly of the components which have been previously described) is then connected to a liquid circulating air-to-liquid heat exchanger and filled with a suitable cooling liquid. A nonlimitative example of cooling liquid is a 50% propylene glycol/water mixture

In accordance with another aspect, there is provided a 1-D linear array having a single DLDB backing layer fully diced and electrically attached directly to a PCB which will now be described. This configuration allows for a relatively easy electrical interconnection of the array, and even a relatively direct application of an ASIC or high-density connector directly to the stack. The array includes a protective wear layer. This layer could alternatively be a lens or a matching layer, depending on the application. Piezoelectric elements, each being separated from one another by a gap (or kerf) form the 1-D linear array. The array also includes a first DLDB structure comprising first a low acoustic impedance ¼ lambda layer, separated into elements with gaps between them, in line with the arrayed piezoelectric elements; and secondly, over the low acoustic impedance layer is provided a high acoustic impedance ¼ lambda layer, which can be made of tungsten. The high acoustic impedance layer is separated into elements with gaps between them, in line with the arrayed piezoelectric elements. The array is also provided with electrodes on PCB surfaces, a PCB and a via in printed circuit board connecting electrodes from one face to the opposite face.

In accordance with yet another aspect of the invention, a dual DLDB equipped 1-D linear array having a second DLDB pair overlaying the first DLDB pair, the second DLDB pair comprising a low acoustic impedance ¼ lambda layer over which is provided a laterally thermally continuous high acoustic impedance ¼ lambda layer. The thermally conductive layer is AIN or could be beryllium oxide or another suitable thermally conductive electrically insulating material and contains electrically conductive vias to make connection to the elements of the transducer. This allows the array to be cooled from the edges, and electrically connected directly with a PCB for example.

In accordance with another aspect, there is provided a 2-D matrix transducer. In some embodiments, the 2-D matrix is a dual DLDB 16 x 16 element matrix array having a laterally thermally continuous layer. The matrix transducer includes a protective wear layer, which could be alternatively replaced by a lens, or a matching layer, depending on the application spanning the full area of the 2D transducer array. The matrix transducer includes piezoelectric elements separated from each other by a gap (or kerf) in two axes to form the 2-D linear array or matrix array. The matrix transducer includes a first DLDB stack comprising a low acoustic impedance ¼ lambda layer, separated into elements with gaps between them in two axes, in line with the arrayed piezoelectric elements, and a high acoustic impedance ¼ lambda layer, which can be made from tungsten. The layer can be separated into elements with gaps between them in two axes, in line with the arrayed piezoelectric elements. The layers and define a first stack. The matrix transducer also includes a second stack. The second DLDB stack includes a low acoustic impedance ¼ lambda layer, separated into elements with gaps between them in two axes, in line with the arrayed piezoelectric elements, and a high acoustic impedance ¼ lambda layer. The layer is generally continuous and is made from AIN. In this context, the expression "continuous" refers to the fact that the stack has no gaps and provides lateral thermal conductivity along both axes of the array. Vertical electrical conductivity is provided by vias in the AIN layer. This layer is particularly useful in maintaining equal temperature in the interior of the 2-D array with respect to the edge elements.

Other features and advantages of the present description will become more apparent upon reading of the following non-restrictive description of specific embodiments thereof, given by way of example only with reference to the accompanying drawings.

**BRIEF DESCRIPTION OF THE DRAWINGS**

Figure 1a shows a liquid cooled ultrasonic transducer, in accordance with one embodiment. Figure 1b shows a backing structure in contact with a piezoelectric material of the ultrasonic transducer of Figure 1a. Figure 1c is a cross-section of Figure 1b. Figure 1d is a cross-section of Figure 1a.

Figure 2 is an exploded view of a liquid cooled ultrasonic transducer, in accordance with another embodiment.

Figure 3 is another exploded view of the liquid cooled ultrasonic transducer illustrated in Figure 2.

Figure 4 illustrates a backing structure in contact with a piezoelectric material of the ultrasonic transducer, and a heat sink in thermal contact with the backing structure, in accordance with one embodiment.

Figure 5 shows a single de-matching layer sandwiched between a piezoelectric material and a dual layer de-matching backing, in accordance with one embodiment.

Figure 6 is a cross-section of Figure 5.

Figure 7 illustrates a 16-element one-dimensional linear array, in accordance with one embodiment.

Figure 8 is a cross-section of Figure 7, illustrating the layers forming the 16-element one-dimensional linear array.

Figure 9 is another cross-section of Figure 7, illustrating the layers forming the 16-element one-dimensional linear array

Figure 10 illustrates a 16-element one-dimensional linear array, in accordance with another embodiment.

Figure 11 is a cross-section of Figure 10, illustrating the layers forming the 16-element one-dimensional linear array.

Figure 12 is another cross-section of Figure 10, illustrating the layers forming the 16-element one-dimensional linear array

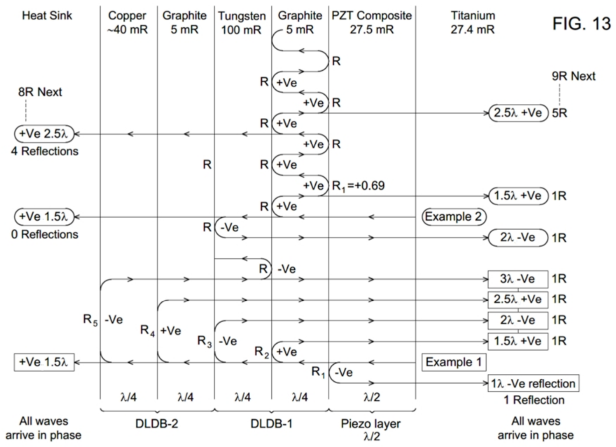

Figure 13 is a simplified illustration of the working principle of ultrasonic transducer. More specifically, considering a relatively narrowband case, there is shown the interaction of the reflection coefficients and the particular arrangement of low and high acoustic impedance layers in the DLDBs resulting in only in-phase reflections arriving at the output (front) face of the transducer. Due to the resonance of each DLDB layer, and the resulting phase of the alternating pairs, energy only leaves a layer in phase every four reflections and is partially destructively interfered with every two reflections. The result is that the energy once trapped in the DLDB layers takes a relatively long time to ring down, and at very low amplitude.

Figure 14 shows a two-dimensional piezoelectric matrix, in accordance with one embodiment.

Figure 15 is an exploded view of Figure 14.

Figure 16 is a cross-section of Figure 14.

Figure 17 shows an ultrasonic transducer, in accordance with another embodiment.

Figure 18 shows an ultrasonic transducer, in accordance with another embodiment.

Figure 19a is a comparison of state-of-the-art air-backed material specific transducer (top) transmitting into Titanium at 680 kHz with no heat sink and the ultrasonic transducer of Figure 1a (bottom) at the same conditions. Figure 19b is a comparison of log of the envelope of the state-of-the-art air-backed material specific transducer transmitting into titanium (top) and the ultrasonic transducer of Figure 1a transmitting into titanium(bottom).

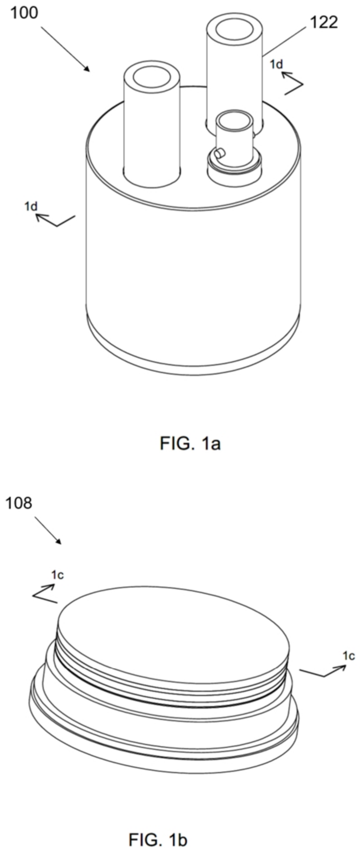

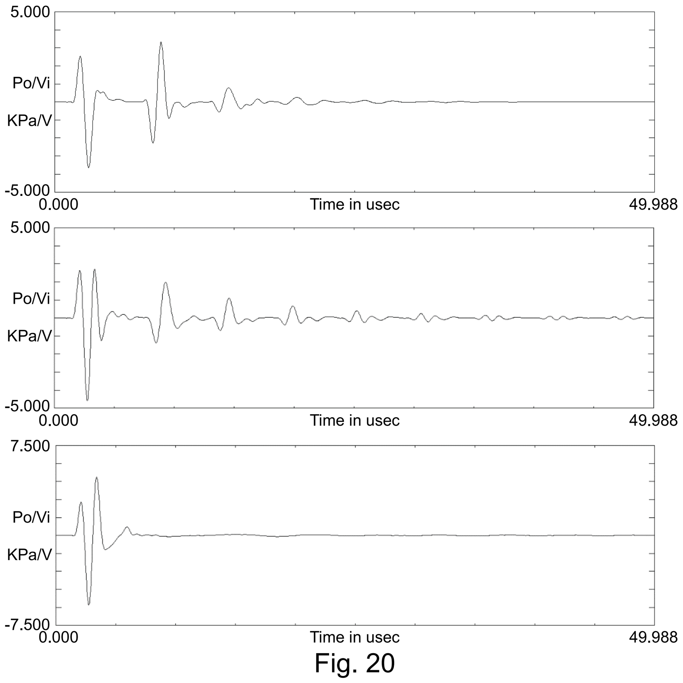

Figure 20 is a comparison of three 680 kHz material specific transducers having copper heatsinks attached to the back surface of the piezoelectric stack: air backed material specific transducer with a heatsink directly bonded to the back surface of the piezo electric element of the transducer (top); state-of-the-art method of bonding a heat sink to the piezo electric element of the transducer with acoustically lossy thermally conductive material such as alumina filled silicone foam (middle); and the ultrasonic transducer of Figure 1a, having a heatsink directly bonded to the backing structure (bottom).

Figure 21 shows the Log of the envelope of the waveforms shown in Figure 20.

Figure 22a is a comparison of 10 MHz single element transducers, pulse echo pulse response with a ¼ lambda resonant piezoelectric element and a ~ 1/10th lambda thick tungsten de-matching layer, illustrating the effect of adding a single DLDB to the back of the de-matching layer. Figure 22b shows the Log envelope comparison of the waveforms of the 10 MHz single element transducers shown in Figure 22a.

Figure 23a is a comparison of the effects of adding a 3 mm thick copper heat sink directly to the back of the 10 MHz acoustic stacks from Figure 22a, the DML backing bonded directly to the 3 mm copper heatsink develops multiple internal reflections which result in unwanted artifacts in imaging or inspection applications (top); and the DLDB equipped stack experiences no measurable changes when the heat sink is bonded directly to the surface of the acoustic stack (bottom). Figure 23b is a comparison of the Log envelopes of the pulse echo waveforms of the 10 MHz transducer shown in Figure 23a.

Figure 24 is a comparison of a pulse echo response from a material specific 5 MHz 1D array element 550 um by 5 mm with a PZT composite piezo element matched to transmit into titanium with dual DLDB backing compared to one with air backing. Minimal difference is seen between the air backed transducer (top) and the DLDB equipped transducer (bottom) apart from a minor pulse length increase seen in the DLDB equipped stack.

Figure 25 is a comparison of the pulse echo response of the transducer elements described in Figure 24 with the addition of a 6 mm copper heatsink directly bonded to the back of the acoustic stacks (top). Significant internal reverberation artifacts are seen when the heat sink is bonded to the back of the air backed transducer (bottom).

## DETAILED DESCRIPTION

In the following description, similar features in the drawings have been given similar reference numerals, and, to not unduly encumber the figures, some elements may not be indicated on some figures if they were already identified in one or more preceding figures. It should also be understood herein that the elements of the drawings are not necessarily depicted to scale, since emphasis is placed upon clearly illustrating the elements and structures of the present embodiments. The terms "a", "an" and "one" are defined herein to mean "at least one", that is, these terms do not exclude a plural number of elements, unless stated otherwise. It should also be noted that terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

In the present description, the terms "connected", "coupled", and variants and derivatives thereof, refer to any connection or coupling, either direct or indirect, between two or more elements. The connection or coupling between the elements may be acoustical, mechanical, physical, optical, operational, electrical, wireless, or a combination thereof.

It will be appreciated that positional descriptors indicating the position or orientation of one element with respect to another element are used herein for ease and clarity of description and should, unless otherwise indicated, be taken in the context of the figures and should not be considered limiting. It will be understood that spatially relative terms (e.g., "outer" and "inner", "outside" and "inside", "periphery" and "central", "over" and "under", and "top" and "bottom") are intended to encompass different positions and orientations in use or operation of the present embodiments, in addition to the positions and orientations exemplified in the figures.

*General theoretical context*

A piezoelectric ultrasound transducer is generally composed of a piezoelectric element having two opposing faces. The piezoelectric element can be chosen to operate at a desired frequency. An example of such an operation includes the acoustics resonance of the piezoelectric element. Piezoelectric acoustic transducers can include a plurality of layers, which can be, for example and without being limitative, stacked or overlaid. In addition to the piezoelectric element(s), a piezoelectric acoustic transducer can include at least one of: signal and ground electrode(s), matching layer(s), acoustic backing(s), lens(es) and many other layer(s) or structure(s) to improve their performance in their intended application. Some transducers can be designed to output acoustic energy *(i.e.,* transmitters), while others can detect impinging acoustic energy *(i.e.,* receivers). It is to be noted that some transducers can be optimized to perform both functions *(i.e.,* transceivers). Different techniques may be implemented in the field of ultrasonic transducers to produce different types of piezoelectric ultrasonic transducers.

In most cases, designing a piezoelectric transducer is associated with numerous challenges, for instance the optimization and/or the direction of acoustic energy to the intended target, as well as the minimization of the acoustic energy away from the intended target. For example, one may consider the relatively simple case of a thin disc shaped piezoelectric element, which when an appropriate frequency voltage is applied across the piezoelectric disc, will tend to produce equal acoustic waves from both the front and back faces of the disc.

There exists a broad variety of techniques to refine the characteristics of such a piezoelectric disc to enhance the acoustic energy output from one face (the front face or distal face, for example), and diminish it from the other face (the back face, or proximal face). One skilled in the art will know that such a piezoelectric element is generally placed such that each face is in contact with an electrically conductive electrode. An example of electrically conductive electrode is sputtered metal, which allows the piezoelectric element to be connected to electronic systems and/or other appropriate circuits. In the implementations wherein an RF voltage signal is applied to the electrodes, the piezoelectric element undergoes a mechanical perturbation. If the frequency of the electric RF signal and the thickness of the one-dimensional piezoelectric array match correct operation conditions, then the piezoelectric element may be made to be mechanically resonant at ultrasonic frequencies. One would note that such a possibility depends on the characteristics of the piezoelectric material.

It is generally known in the art that backings can be used in piezoelectric ultrasonic transducers. Examples of backing includes, but are not limited to absorbing backings having acoustic impedance much lower than the piezoelectric layer, some having composite forms to dissipate and absorb acoustic energy, de-matching layers having acoustic impedance much higher than the piezoelectric layer and thickness typically less than ¼ lambda designed to efficiently reflect all energy to the output of the transducer while allowing a tunable mass loading effect, as well as other technologies such as air backing, and many other variations including delay line backings and still others.

Many transducer backings are low acoustic impedance absorbing backings and are designed to reflect the majority of or at least a significant portion of the energy toward the front (or, alternatively the "working face") of the transducer and absorb and dissipate the un-reflected energy within the backing. Such absorbing backings generally have a predetermined geometrical configuration, for instance the backings can be sufficiently large and have a specific shape to absorb enough acoustic energy and prevent unwanted internal reflections from returning to the piezoelectric crystal. These low acoustic impedance backings typically require that the piezoelectric layer operate in ½ lambda resonant mode.

De-matching layers are another common backing technology, designed to reflect the energy out the front of the transducer, while providing a somewhat adjustable mass load for tuning damping. The effect of adding a de-matching layer generally requires the design of a ¼ wave resonant transducer. In some implementations, the de-matching layers can be operated to reflect close to 100 percent of the energy, or at least a significant portion of the energy.

Another implementation includes air backed transducers, which can also reflect close to 100 percent of energy out the front, or at least a signification portion thereof. However, such transducers do not allow for mass loading or damping but will work in the same mode as a light absorbing backing, in that the piezoelectric will resonate at ½ lambda.

One limitation of most backing technologies, amongst others, is that the back of the transducer is not accessible for electrical connection without compromising the acoustic signal and should generally be made off to the side of in a minimal footprint to minimize acoustic artifacts and/losses. A further limitation of existing technologies is the difficulty in providing for efficient thermal cooling solutions in direct contact with the piezoelectric elements of the transducer. The aforementioned challenges are of increasing significance as modern relaxor-based polycrystalline and single crystal ferroelectrics become more and more efficient at the expense of thermal robustness.

It is to be noted that 2-D array transducers can make both cooling and electrical interconnection and acoustic backing considerations more challenging due to the lack of access to the interior elements of a matrix transducer. As a result, there exists a need to develop an acoustically efficient backing that is electrically conductive, as it will be herein described. There is also a need to develop an acoustically efficient backing technology that is thermally conductive, as it will be herein described. There is also a need to develop an acoustically and spatially efficient backing that is capable of reflecting nearly all of the acoustic energy of the piezoelectric transducer while leaving the proximal face of the backing relatively free of acoustic energy making the connection of electrical and or thermal devices possible without disrupting the performance of the transducer, as it will be herein described. There exists a need to develop a thermally conductive and electrically conductive acoustically efficient backing that can be connected to a 1-D or 2-D array transducer providing electrical connectivity to each element, cooling to each element, as it will be herein described.

*Backing structures for ultrasonic transducers*

Broadly described, the present description relates to multilayered ultrasound transducer backing structures or similar technologies. In some embodiments, the technology allows reflecting a significant portion and, in some instances, virtually all acoustic energy out the front of the transducer. Additionally, the systems or devices made according to the current technology are generally not affected by physical contact at the back of the backing stack. The transducers that will be herein presented are thermally electrically and acoustically relatively efficient as very little energy is absorbed in backing layers.

In the context of the current disclosure, and as it will be described in greater detail below, the backing structure may include one or more de-matching backings, each including two layers. In this regard, each de-matching backing will be referred to as a "dual layer de-matching backing", or simply "DLDB". In some embodiments, a DLDB pair can be used as the backing structure, *i.e.,* the ultrasonic transducer may include a first DLDB and a second DLDB, each DLDB including two layers. In other embodiments, two or more of DLDB pairs can be used as the backing structure, for example and without being limitative, to further acoustically isolate the back surface.

Of note, the layers forming the DLDB have electrical, acoustical, thermal and mechanical properties, and these properties may vary according to the targeted application. For example, and without being limitative, the DLDB may include layers that are electrically conductive and thermally conductive, layers that are neither electrically or thermally conductive, or any combinations thereof.

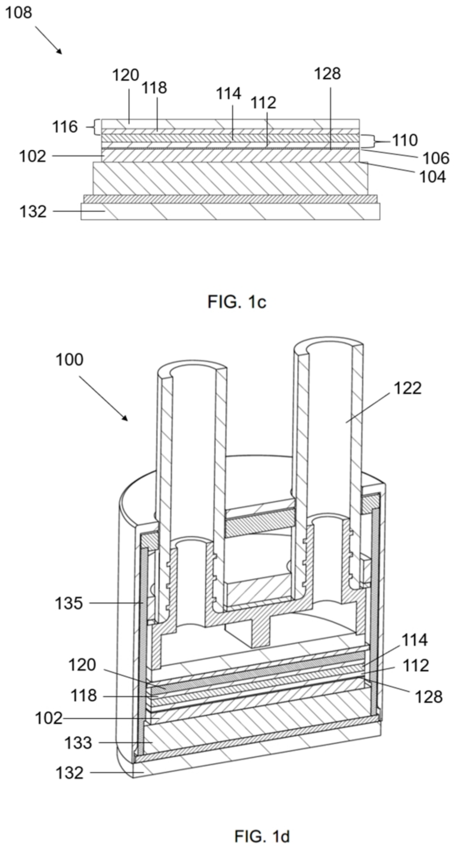

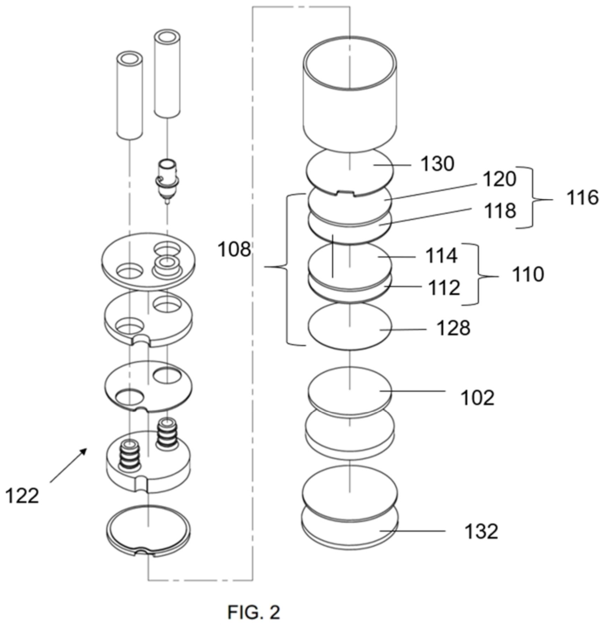

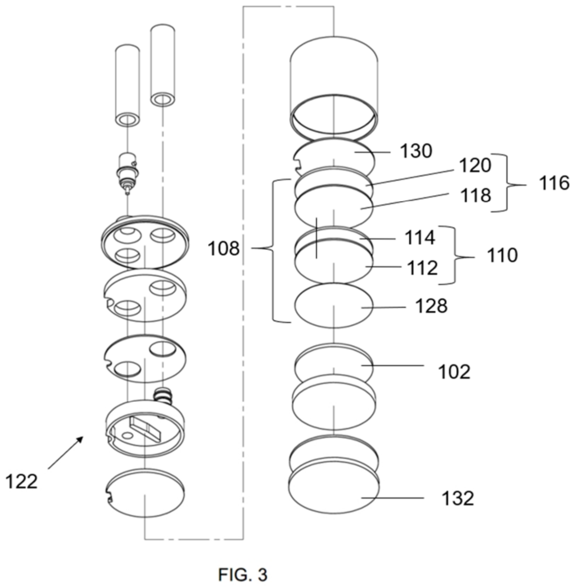

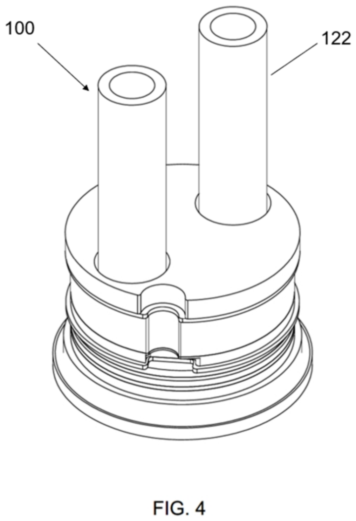

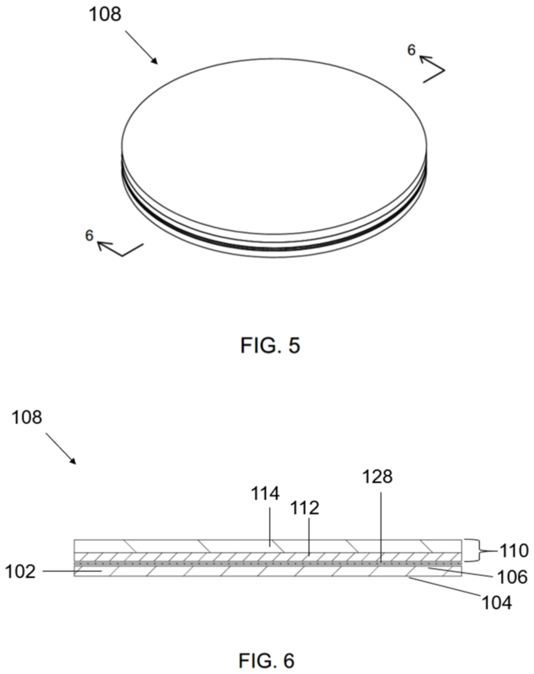

With reference to Figures 1 to 6, embodiments of an ultrasonic transducer 100 will be described.

The ultrasonic transducer 100 generally includes a piezoelectric material 102, a backing structure 108, a heat sink 122, and one or more electrodes 126 (referred to as the electrodes 126). While the embodiments of the ultrasonic transducer that will be described throughout the description will be described as including a piezoelectric material, one skilled in the art would note that the ultrasonic transducers of the current disclosure may instead include any ferroelectric materials, any single crystals or polycrystalline materials, any electromechanical transduction materials, such materials having one or more of the following properties: ferroelectricity, pyroelectricity, piezoelectricity, electrostriction and/other relevant properties. It will be noted that, in the context of the present description, the expression "piezoelectric material" may also refer to ferroelectric material, pyroelectric material, relaxor material and electrostrictive material, as it would be readily understood by one skilled in the art.

The piezoelectric material 102 has a front surface 104 and a back surface 106. The piezoelectric material 102 is configured to be in acoustic communication with a sample (not illustrated in the Figures). The piezoelectric material 102 has acoustic properties. For example, and without being limitative, the acoustic properties may include an acoustic impedance of about 27.5 MegaRayls.

In some embodiments, the piezoelectric material 102 may be a poled composite piezoelectric disc. The poled composite piezoelectric disc may be in a 1 3 configuration.

In some embodiments, the piezoelectric material 102 may be a composite of PZT4 and may include pillars. For example, and without being limitative, the pillars may be 1000 um by 1000 um pillars separated by 200 um kerfs. The kerfs may be cut at a pitch of about 1200 um. The kerfs may be filled with a composite filler. In some embodiments, the composite filler may be in a 0 3 configuration. The composite filler may include particles of hafnium dioxide doped into epoxy. A nonlimitative example of epoxy is Epo-Tek® 301. In some embodiments, the piezoelectric material 102 may have a thickness included in a range extending from about 2.35 mm to about 2.45 mm

In some embodiments, the piezoelectric material 102 consists of a piezoelectric layer.

The backing structure 108 is positioned at the back surface 106 of the piezoelectric material 102. The backing structure 108 is configured to reflect acoustic energy towards the front surface 104 of the piezoelectric material 102. In some embodiments, the backing structure 108 is further configured to reflect the acoustic energy in phase. In some embodiments, the backing structure 108 is further configured to spatially and temporally disperse unwanted acoustic reverberations in the backing structure 108. The backing structure 108 is thermally conductive and electrically conductive. The backing structure 108 illustrated in Figures 1 to 6 includes a first dual layer de-matching backing 110 and second dual layer de-matching backing 116.

The first dual layer de-matching backing 110 includes a first layer of graphite 112 and a layer made of tungsten 114 in contact with the first layer of graphite 112. In some embodiments, the first layer of graphite 112 has an acoustic impedance of about 5.1 MegaRayls and has a thickness included in a range extending from about 1.5 mm to about 1.6 mm. In some embodiments, the layer of tungsten 114 has an acoustic impedance of about 100 MegaRayls and a thickness included in a range extending from about 2.6 mm to about 2.7 mm. One skilled in the art would readily understand that the acoustic impedance and the thickness of the first layer of graphite 112 and the layer of tungsten 114 are dictated by the targeted application, and so could be different from the examples listed above.

The second dual layer de-matching backing 116 contacts the first dual layer de-matching backing 110. The second dual layer de-matching backing 116 includes a second layer of graphite 118 and a layer of copper 120 in contact with the second layer of graphite 118. In some embodiments, the second layer of graphite 118 has an acoustic impedance of about 5.1 MegaRayls and a thickness included in a range extending from about 1.5 mm to about 1.6 mm. In some embodiments, the layer of copper 120 has an acoustic impedance of about 41.5 MegaRayls and has a thickness included in a range extending from about 2.5 mm to about 2.6 mm. One skilled in the art would readily understand that the acoustic impedance and the thickness of the second layer of graphite 118 and the layer of copper 120 are dictated by the targeted application, and so could be different from the examples listed above.

The heat sink 122 is in thermal contact with the backing structure 108. In some embodiments, the heat sink 122 includes at least one channel 124. Such a channel 124 is configured for receiving and circulating a heat transfer fluid therein. The heat transfer fluid may be a liquid, gaseous, or any mixtures thereof. In some embodiments, the heat sink 122 is electrically insulated from the backing structure 108.

The electrodes 126 are in electrical communication with the piezoelectric material 102. In some embodiments, the ultrasonic transducer 100 includes a control unit (not illustrated in the Figures) electrically connected to at least one of the piezoelectric material 102, the backing structure 108 and the electrodes 126. Such a control unit may be useful to control the ultrasonic transducer 100. In some embodiments, the electrodes 126 are electrically connected to the piezoelectric material 102 through the backing structure 108.

The ultrasonic transducer 100 is operable at an operational frequency. This operational frequency is related to an operational wavelength λo. In some embodiments, the first layer of graphite 112, the layer made of tungsten 114 in contact with the first layer of graphite 112, the second layer of graphite 118 and the layer of copper 120 each have a corresponding thickness of about λo/4 thick or odd multiples of λo/4. In some embodiments, the operational wavelength λo may be about 530 kHz.

In one embodiment, the piezoelectric material 102 is configured to be half wave resonant at the operational frequency.

In another embodiment, the ultrasonic transducer 100 includes a single de-matching layer 128 positioned between the piezoelectric material 102 and the backing structure 108. The single de-matching layer 128 is in acoustic communication with the piezoelectric material 102 and the backing structure 108. The single de-matching layer 128 has a corresponding acoustic impedance relatively higher than an acoustic impedance of the piezoelectric material 102. In this embodiment, the piezoelectric material 102 is configured to be quarter wave resonant at the operational frequency. The piezoelectric material 102 has a resonant frequency, and this resonant frequency is related to a resonant wavelength $\lambda r$. The single de-matching layer 128 has a thickness of less than $2\lambda r/5$ thick with respect to the resonant frequency of the piezoelectric material 102. The single de-matching layer 128 may have a thickness ranging between about $\lambda r/10$ and about $\lambda r/20$. The single de-matching layer 128 may be made, for example and without being limitative, from tungsten. Other materials could be used for the single de-matching layer 128. In some embodiments, the resonant wavelength $\lambda r$ may be about 530 kHz.

In some embodiments, the ultrasonic transducer includes a thermally conductive structure 130 in contact with the backing structure 108. In some embodiments, the thermally conductive structure 130 is electrically insulated from the backing structure 108. In some embodiments, the thermally conductive structure 130 may be a layer made of AIN or a layer made of beryllium oxide. In some embodiments, the thermally conductive structure 130 may extend on lateral portions of the backing structure 108. In some embodiments, the thermally conductive structure 130 includes at least one electrically conductive via passing through the thermally conductive structure 130.

In some embodiments, the ultrasonic transducer 100 includes a wear layer 132 having abrasion-resistant properties. The wear layer 132 may be made, for example and without being limitative, from titanium.

In some embodiments, the ultrasonic transducer 100 includes a thermally conductive layer 133 acoustically matched with the piezoelectric material 102. As depicted in Figure 1d, the thermally conductive layer 133 may be provided between the piezoelectric material 102 and the wear layer 132. Such a thermally conductive layer may be in thermal contact with the heat sink 122 through a copper lid 135. Of note, the lid 135 could be made from any other thermally conductive material.

In some embodiments, the ultrasonic transducer 100 has a diameter of about 50 mm.

Examples

Other embodiments of the ultrasonic transducer having been insofar described will now be presented.

In some embodiments, the ultrasonic transducer includes two stacked DLDBs stacked (Dual DLDB stack) on a single element liquid cooled material specific transducer designed to match titanium. One exemplary embodiment of the DLDB designed to operate on a 680 kHz piezoelectric transducer having a piezocomposite element of 27.5 MegaRayls (MR) acoustic impedance includes a first DLDB bonded to a second DLDB pair, the first DLDB pair includes a first layer of graphite having an acoustic impedance of approximately 5.1 MR and a thickness of 1.03 mm, and a second layer of tungsten metal having an acoustic impedance of approximately 100 MR and a thickness of 1.53mm, the second DLDB pair includes of a first layer of graphite having an acoustic impedance of approximately 5.1 (MR) and a thickness of 0.905 mm, and a second layer of copper metal having an acoustic impedance of approximately 41.5 MR and a thickness of 1.71 mm.

In some embodiments, one or two DLDBs on a single element transducer having a high acoustic impedance de-matching layer (DML) of less than 2/5 lambda and typically less than 1/4 lambda, interposed between the DLDB stacks and the piezo element.

In some embodiments, the DLDB includes a first backing layer and a second backing layer, each having a distal face and a proximal face. The proximal face of the first backing layer can be in acoustic contact with the distal face of the second backing layer; the two layers together comprising the DLDB structure. The DLDB, in turn, can be placed in acoustic contact with a piezoelectric element having a distal and a proximal face, the distal face of the first backing layer being in contact with the proximal face of the piezoelectric element. The first and second backing layers of the DLDB can be designed to be about ¼ lambda thickness for the designed resonant frequency of the piezoelectric element. The first backing layer can be made from a material having a relatively lower acoustic impedance as compared to the piezoelectric element. The second backing layer can be made from a material having a relatively higher acoustic impedance compared to the first backing layer.

In the embodiments wherein two or more DLDBs are stacked, an improved or increased acoustic isolation from electrical and thermal structures connected to the transducer through the DLDB may be achieved.

In some embodiments, in operation, the first face of the first layer of the first DLDB reflects the majority of the acoustic energy directed towards the backing of the transducer back out the working face of the transducer, while the back face of the first layer also reflects most of the energy that reaches it, doing so in phase. The layers of the DLDB then begin to resonate with the remaining energy in the backing, over the bandwidth of the transducer due to ¼ wave layers and alternating sign of the reflection coefficients due to the transition from low to high acoustic impedance in the layers included in the DLDB. The resonating layers then release the energy in phase both forward and backwards through the backing stack, over a relatively long period of time and at a very low amplitude, effectively spreading unwanted reflections out over time at an acceptably low amplitude.

The embodiments of the DLDB having been described may be effective on acoustic stacks having been designed for ½ lambda resonant piezoelectric transducers and an intended load that is greater than the acoustic impedance of the light layer of the DLDB(s) and well matched to the acoustic impedance of the piezoelectric layer. Example of such structures can be found in PCT patent application PCT/CA2019/051046, the content of which is herein incorporated by reference.

The embodiments of the DLDB as described herein can also be effective on acoustic stacks having been designed for ½ lambda resonant piezoelectric transducers and an intended load that is greater than the acoustic impedance of the light layer of the DLDB. When the load is comparable to or lower than the lower acoustic impedance layer of the first DLDB layer, the transducer can include a piezoelectric layer having higher acoustic impedance than the load and one or more matching layers.

In some embodiments, the DLDB can be used with a ¼ lambda stack in conjunction with a de-matching layer. In another example, the DLDB can be included with a high acoustic impedance de-matching layer into a ¼ lambda resonant piezoelectric transducer design, wherein the high acoustic impedance de-matching layer is interposed between the DLDB and the piezoelectric material with nearly no restriction to the acoustic impedance of the load material. This technique may be applied to material specific transducers, or transducers having matching layers or any other practical load matching method.

A variation of the thickness of the DLDB layers can be used to expand the bandwidth of the transducer and to improve the reflectivity of the backing over a broader frequency spectrum. Such a variation can be implemented depending on the targeted application.

Due to the relatively high acoustic isolation achieved by the DLDB and the possibility of making the layers thermally conductive, it is possible to directly apply a heat sink to the proximal face of the DLDB, resulting in a highly efficient removal of heat directly from the back of the piezoelectric element without compromising the acoustic properties of the transducer.

Due to the relatively high acoustic isolation achieved by the DLDB and the possibility of making the layers electrically conductive, it is possible to make electrical connection directly to the proximal face of the DLDB by, for example, soldering, wire bonding, or using conductive epoxy to attach a wire or other electrical circuit to the top layer of the DLDB.

In some embodiments, it is further possible to dice the DLDB into elements aligned with the piezoelectric elements of a transducer array such as, for example, a 1-D linear array, a 2-D matrix array, or other multi element transducer arrays such that one can apply a printed circuit board, or ASIC interposer, electrical connector, or other electrical circuit directly to the proximal face of the DLDB, making a highly efficient electrical connection to the transducer. This can be useful when the ultrasonic probe is a 2-D multi-element array making the connection to a relatively large number of elements possible in directly to the DLDB corresponding to each element of the array without compromising the acoustic properties of the transducers. These embodiments will be described in other sections of the description.

Due to the backing being relatively low profile and enabling direct electrical connection to the low profile DLDB, the present technology can provide advantages in terms of design when it comes to low-profile ultrasonic probes. Examples of low-profile ultrasonic probes include but are not limited to probes used for intracavity medical probes, endoscopes, and NDT cylindrical transducers and arrays.

In some embodiments, the DLDB has one or more layers, each being made from a thermally conductive material that is laterally electrically insulating and axially conductive, thus resulting in an isotropic thermally conductive and anisotropic electrically conductive layer. In one embodiment, the high acoustic impedance layer is made from an aluminum nitride (AlN) ceramic for example. The high acoustic impedance layer has a plurality of electrically conductive vias arranged to align with a multi-element array element. The other layer of the DLDB can be separated into laterally electrically and acoustically isolated elements, aligned with the elements of the piezoelectric array by, for example, dicing, etching, or machining or by other methods. The combination of these two layers results in a backing that provides electrical connectivity from each transducer element to the proximal surface of the DLDB, lateral electrical isolation from one element to every other element though the entire DLDB and piezoelectric stack, and contiguous and/or continuous lateral thermal conductivity over the entire array of elements. One skilled in the art will understand that heat sinking of the transducer can then be achieved by removing heat from the perimeter of the AlN layer through the use of some means of cooling technology, for example, an air-to-air heat exchanger, or for example a liquid cooling heat sink, while still enabling direct electrical connection of the array to a PCB or interposer. It can be readily seen by one skilled in the art that this approach can be adapted to multiple DLDB stacked to increase acoustic isolation and/or thermal conductivity. This use of electrically isolated thermally contiguous and/or continuous DLDBs in 1-D and especially 2-D transducer array allows direct cooling of large arrays without compromising acoustic performance and affording a relatively simple and cost-effective means of electrical interconnection.

In some embodiments, the DLDB may be liquid cooled.

In some embodiments, there is provided a liquid cooled DLDB equipped 680 kHz material specific transducer for use with titanium and other similar acoustic impedance materials (such as zirconium). The transducer may have a 50 mm diameter and a dual DLDB equipped stack.

One would note that the transducer is an exemplary embodiment of the technology and serves an illustrative purpose only. Apart from what is being disclosed in the current description, the transducer could include some other elements known one skilled in the art.

In some embodiments, the transducer comprises a 2.4 mm thick 1 3 poled composite piezoelectric disc, the thickness corresponding to about between 0.35 and 0.4 lambda in an unloaded free resonance condition, but operating in ½ lambda mode, having a positive electrode on the proximal face and negative electrode on the distal face. As one skilled in the art will understand, the thickness of the piezoelectric disc is chosen to be thinner than ½ lambda to compensate for the mass loading effect of the DLDB backing and acoustic loads. The piezoelectric composite can be made by dicing and filling poled PZT4 material having 200 um kerfs cut at a pitch of 1200 um leaving 1000 um by 1000 um pillars separated by 200 um kerfs. The kerfs can be, for example and without being limitative, filled with a 0 3 composite filler of c.a. 5 um particles of hafnium dioxide doped into Epotek® 301 epoxy, such that the acoustic impedance of the composite kerf filler material ranges between approximately 7 to 8 Mega Rayls (MR), and the acoustic impedance of the overall piezocomposite layer is closely matched to titanium being approximately 27.5 MR. The negative face of the piezoelectric composite layer can be bonded to the proximal face of a 6 mm thick disc of ZA-8 zinc-aluminum alloy, using, for example, a tungsten powder loaded epoxy. The distal face of the ZA-8 disc, can then be bonded to the proximal face of an alumina composite disc, using a submicron particle hafnium oxide loaded Epotek 301 epoxy. The alumina composite disc can include pillars of 750 um by 750 um by 1400 um height, separated by kerfs of 200 um, the kerfs being filled with the same hafnium particle loaded epoxy used to make the piezoelectric composite disc. The distal face of the alumina composite can be bonded in turn to the proximal face of a 3 mm thick disc of titanium, with a layer of submicron hafnium oxide loaded Epotek 301 epoxy. Two sets of dual layer de-matching backings (DLDB) are then bonded to the proximal face of the piezoelectric disc using sub-micron tungsten powder loaded epotek 301 epoxy as follows. The proximal face of the piezoelectric composite disc is bonded to the distal face of a 1030 um thick Poco DFP-1 graphite disc, having acoustic impedance of 5.1 MR, 905 um corresponding to ¼ lambda at 680 kHz, the centre frequency of the transducer. The proximal face of the graphite disc is then bonded to the distal face of a 1530 um thick tungsten disc, having acoustic impedance of 100 MR, the thickness of the tungsten disc corresponding to ¼ lambda at ~ 850 kHz, also slightly above the center frequency of the transducer. The proximal face of the tungsten disc is then bonded to the proximal face of a 905 um thick Poco DFP-1 graphite disc, having acoustic impedance of 5.1 MR, the thickness corresponding to ¼ lambda at ~800 kHz, slightly above the centre frequency of the transducer. The proximal face of the graphite disc is bonded to the distal face of a 1710 um thick copper disc, having acoustic impedance of 41.5 MR, the thickness corresponding to ¼ lambda at 680 kHz. The graphite disc, and tungsten disc, constitute the first dual-layer de-matching backing stack, and the graphite disc and copper disc constitute the second DLDB stack. These two stacks work together to acoustically isolate the piezoelectric composite disc from the thermal cooling elements of the transducer, allowing the thermal cooling solution to be directly bonded to the proximal face of the copper disc without substantially disrupting the acoustic performance of the transducer. In these embodiments, the distal face of a 1 mm thick highly thermally conductive AlN disc is bonded to the proximal face of the copper disc, using thermally conductive epoxy. The AlN disc is notched to allow space for electrical connection to the copper disc to be made with a soldered wire, or alternatively, a conductive epoxy bonded wire. It should be noted that the entire DLDB stack in this embodiment is both electrically and thermally conductive, making electrical connection to the signal electrode of the piezoelectric composite disc possible directly through the DLDB stacks. In addition, it should be noted that many materials exist that can be practically used in the application of the disclosed technology beyond those being explicitly described in this exemplary embodiment, some of which are electrically conductive, thermally conductive, or both, or neither thermally or electrically conductive. In this exemplary embodiment, the DLDB layers are all both electrically and thermally conductive. The proximal face of a copper heat sink base is brazed or soldered to the distal edge a heat-sink top, to form a hollow copper heat sink assembly, the distal face of which is directly bonded to the proximal face of the AlN disc, with thermally conductive but electrically insulating epoxy. In the illustrated embodiments, the proximal face of the hollow heat sink top is bonded with the same thermally conductive epoxy to the distal face of an AlN disc. The AlN disc has two clearance holes in it and a notch, the holes allowing for the cooling tubes, to be affixed to the integral barbed tubes of the heat sink top, and the notch allowing a clearance path for the signal wire attached to the copper DLDB layer. The proximal face of the AlN disc can be bonded to the distal face of the copper heat spreader using thermally conductive epoxy. The copper housing shell can be press fit onto the perimeter of ZA-8 disc and bonded to the complete acoustic and thermal stack using an electrically insulating and thermally conductive epoxy. In some embodiments, all the voids are filled with thermally conductive electrically insulating epoxy, thus making the entire assembly solid, apart from the hollow interior of the heatsink assembly (*i.e.*, heatsink top and heat sink bottom). Rubber hoses, which can have, for example and without being limitative, an inner diameter of 3/8 of an inch, are fitted to the top copper heatsink barbed hose bosses and fixed in place with hose clamps. The transducer includes an electrical contact, which can be embodied by a BNC RF electrical connector, soldered to the copper lid. The centre conductor of the BNC connector can further be soldered to the signal wire thus electrically connecting the BNC signal conductor to the positive signal electrode of the piezoelectric composite disc. The copper lid can, in some embodiments, be soldered or bonded with conductive epoxy to the proximal lip of the copper shell, completing the electrical connection from the ground of the BNC connector and the negative electrode of the piezoelectric composite disc via the copper shell and the ZA-8 disc. The transducer also includes an electrically insulating plastic housing, bonded to the copper lid and copper shell, at least partially covering the edge of the alumina composite disc and resting on the surface of titanium disc. The resulting transducer (i.e., the assembly of the components which have been previously described) is then connected to a liquid circulating air-to-liquid heat exchanger and filled with a suitable cooling liquid. A nonlimitative example of cooling liquid is a 50% propylene glycol/water mixture.

These embodiments can be used to provide direct cooling to the signal electrode of the piezoelectric composite disc, via the dual DLDB stacks, as well as indirect cooling to the ground electrode of the piezocomposite disc, via the copper shell and ZA-8 disc, allowing for the removal of hundreds of Watts with coolant flow rates of about a few liters per minute and a heat exchanger. More specifically, in some embodiments, the ultrasonic transducer may include a thermally conductive layer acoustically matched with the piezoelectric material to allow such an indirect cooling. Additionally, the design being herein described allows for high bandwidth of over 90% one way (e.g., 6 dB bandwidth for the exemplary transducer), and negligible reverberation artifacts to be possible while directly cooling the piezoelectric element with an efficient liquid filled metal heat sink.

In some embodiments, there is provided a stack of piezoelectric layer and DLDB for liquid cooled transducers. Five layers may be superimposed, but it would be readily understood that that they could coextend along an entirety or only a portion of their surface. The layer is a single element ½ lambda piezoelectric composite layer matched to titanium. The layer is a low acoustic impedance ¼ lambda graphite layer of the first DLDB stack. The layer is a high acoustic impedance ¼ lambda tungsten layer of first DLDB stack. The layer is a low acoustic impedance ¼ lambda graphite layer of second DLDB stack. The layer is a high acoustic impedance ¼ lambda copper layer of first DLDB stack.

In some embodiments, the ultrasonic transducer includes a titanium wear layer, an aluminum oxide (AlN) composite electrical isolation layer, and a thermally, electrically, and acoustically conductive layer. The layer can be, for example and without being limitative, made of zinc or zinc alloy, and be acoustically matched to titanium while being a better thermal conductor. The transducer further includes a single element ~ ½ lambda piezoelectric composite layer. The layer can be matched to titanium. The transducer includes a first and second DLDB stacks, each including a low acoustic impedance layer and a high acoustic impedance layer. More particularly, the first DLDB stack includes a low acoustic impedance ¼ lambda graphite layer and a high acoustic impedance ¼ lambda tungsten layer, and the second DLDB stack includes a low acoustic impedance ¼ lambda graphite layer and a high acoustic impedance ¼ lambda copper layer. The transducer according to this embodiment further includes a thermally conductive electrical insulation layer. The layer can be made of, for example and without being limitative, aluminum nitride. The transducer also includes an electrically and thermally conductive housing, as well as an electrically insulating plastic external housing. Other components of the transducers include, but are not necessarily limited to an electrically insulating disc with hose cutouts, which can be made from AlN, a water block heat exchanger base, a water block heat exchanger top, a heat transfer layer with hose cutouts, which can be made from copper, a copper housing lid, a BNC RF electrical connector and liquid cooling hoses.

In some embodiments, there is provided an acoustic Stack with two DLDB stacks in place with a fully electrically isolated liquid cooling heat exchanger in direct thermal contact with the copper layer of the DLDB via an AlN electrical insulating layer.

In some embodiments, there is provided a 10 MHz piezoelectric single element traducer stack having a 0.12 lambda (62.5 um) thick tungsten de-matching layer interposed between a dual layer de-matching backing stack includes of a ¼ lambda thick (70 um) low impedance graphite layer and a ¼ lambda thick (130 um) high impedance tungsten layer. This includes a 10 MHz piezoelectric stack having a 115 um thick 1 3 PZT composite stack, a 62.5 um thick tungsten de-matching layer and a dual layer de-matching backing stack. The transducer according to this embodiment includes a single element ¼ lambda piezoelectric composite layer, which can be matched to titanium. The transducer also includes a 0.12 lambda de-matching layer, which can be made from tungsten. The transducer also includes one DLDB stack, which includes a low acoustic impedance ¼ lambda layer which can be made of graphite and a high acoustic impedance ¼ lambda layer which can be made of tungsten.

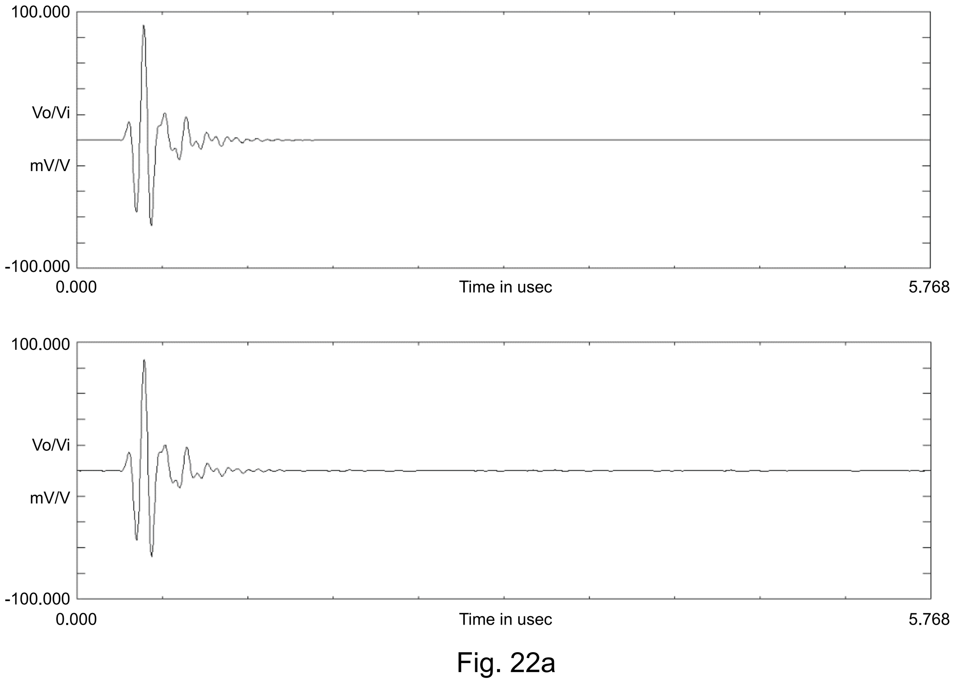

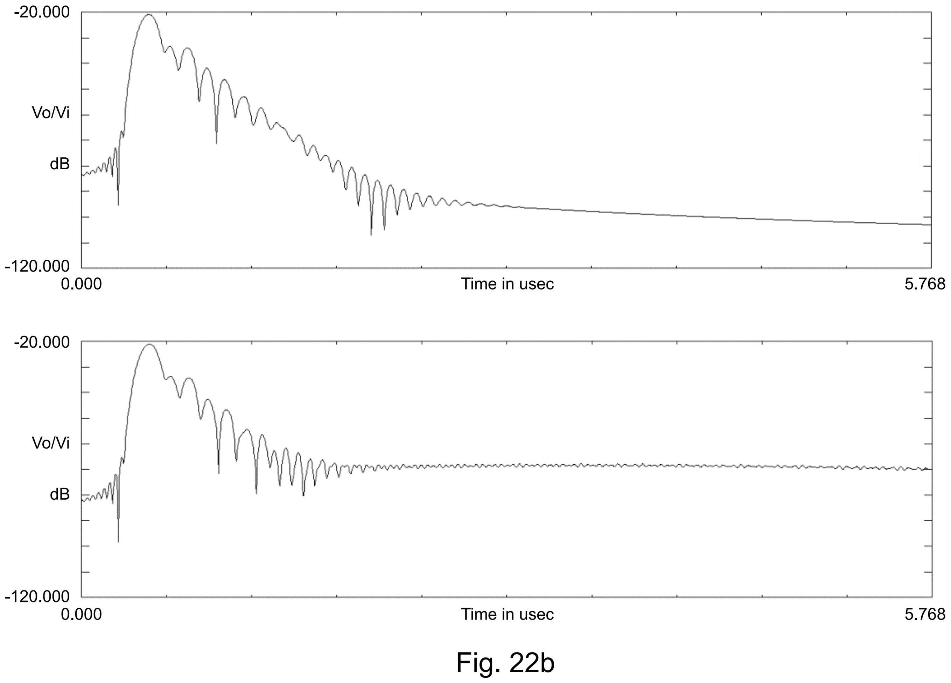

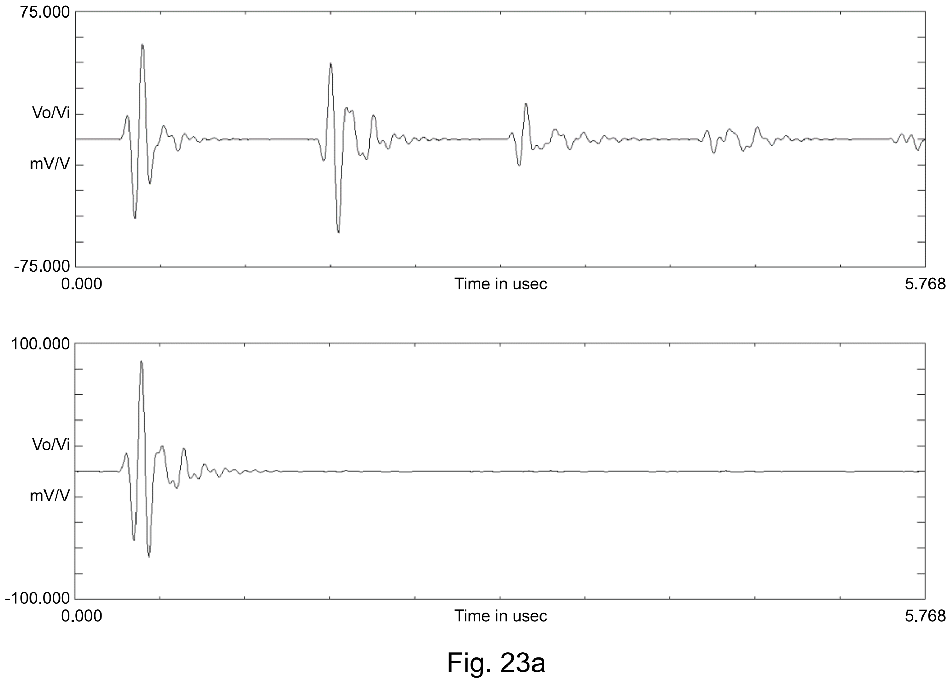

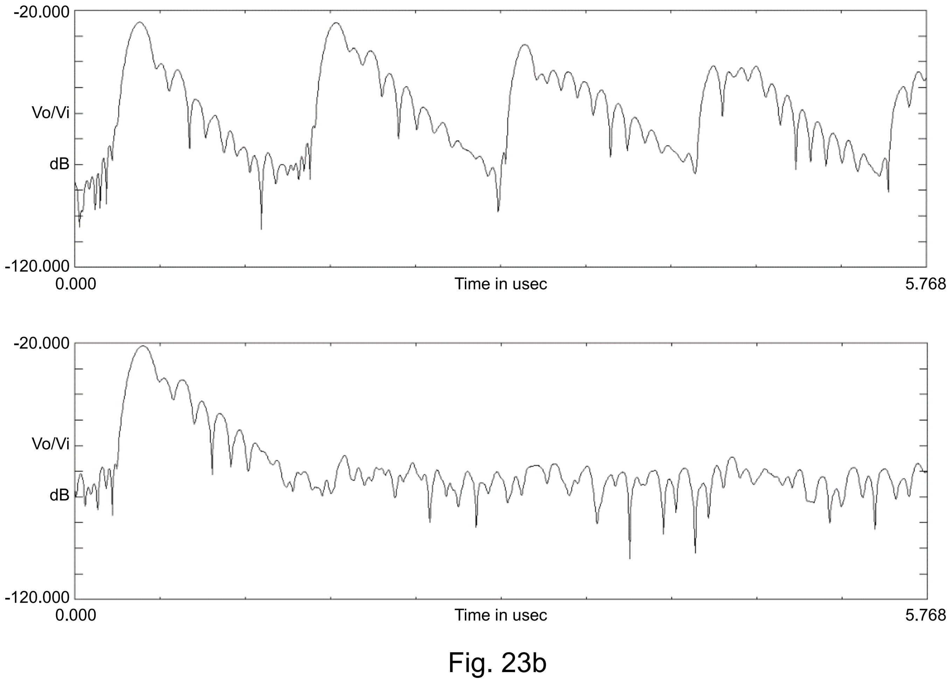

In some embodiments, there is provided 10 MHz piezocomposite transducer design. The acoustic stack may include a piezoelectric composite disc, a tungsten de-matching layer, and a dual de-matching backing stack includes a graphite layer, and a tungsten layer. The piezo composite disc, has acoustic impedance of approximately 25 MR, thickness of 115 um, corresponding to approximately ¼ lambda, and has a positive pole and electrode on the proximal face, and negative pole and electrode on the distal face of the disc. The tungsten de-matching layer, is 62.5 um thick, corresponding to approximately 0.12 lambda. The graphite layer, of the DLDB is 70 um thick, corresponding to ¼ lambda at 10 MHz, and the tungsten layer, is 130 um thick, also corresponding to ¼ lambda at 10 MHz. The acoustic stack is bonded together using a low viscosity epoxy, such as Cotronics 4461. Electrical connection is made by loading a fraction of submicron tungsten powder into the epoxy where required. One skilled in the art will understand that for the purposes of matching the piezo composite element to water ¼ wave matching layers may be used. For the purposes of this exemplary embodiment, two ¼ wave matching layers are used, the first matching layer bonded to the distal face of the piezo composite layer, having acoustic impedance of ~10 MR, and the second having acoustic impedance of ~ 3 MR. The results of simulated testing of this stack with and without a copper heat sink bonded to the proximal face of the high acoustic impedance layer of the DLDB, are shown in figures 22a, 22b, 23a, and 23b.

Different embodiments of an ultrasonic transducer including a one-dimensional piezoelectric array will now be described.

## Ultrasonic transducers including a one-dimensional piezoelectric array

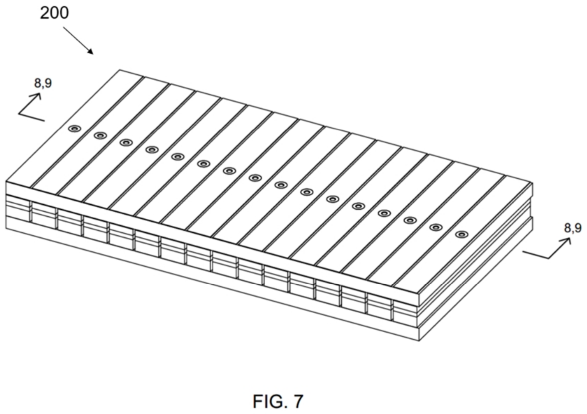

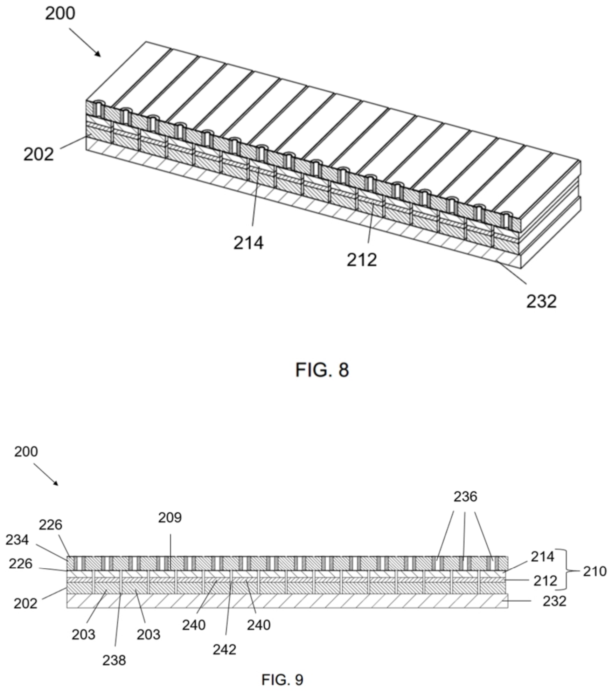

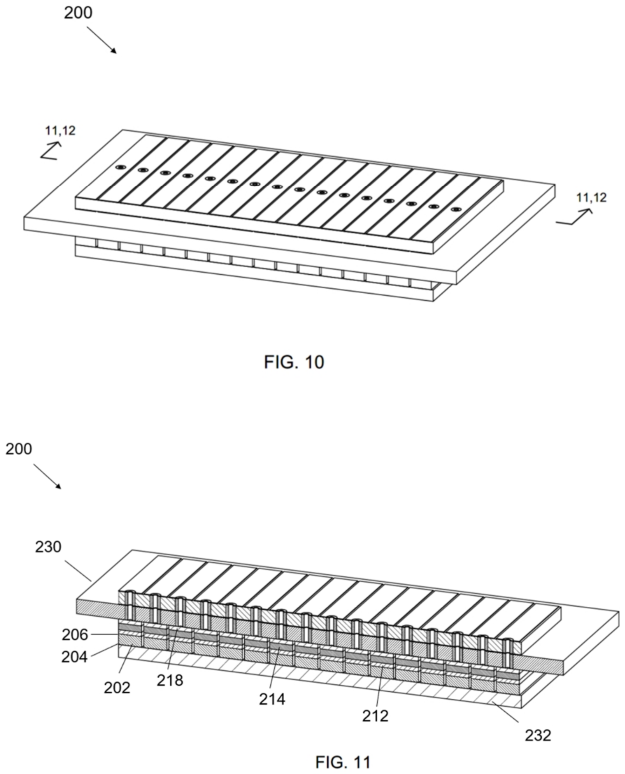

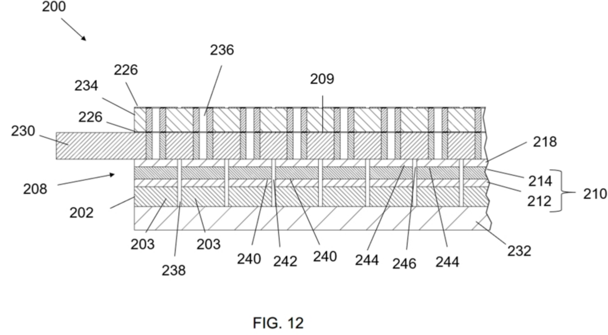

Now turning to Figures 7 to 12, there is illustrated an ultrasonic transducer array 200.

The ultrasonic transducer array 200 includes a one-dimensional piezoelectric array 202 having a front surface 204 and a back surface 206. The one-dimensional piezoelectric array 202 is configured to be in acoustic communication with a sample (not illustrated in the Figures). As illustrated, the array 202 includes a plurality of piezoelectric regions 203 arrayed in one dimension.

The ultrasonic transducer array 200 also includes a backing structure 208 positioned at the back surface 206 of the one-dimensional piezoelectric array 202. The backing structure 208 is configured to reflect acoustic energy towards the front surface 204 of the one-dimensional piezoelectric array 202. In some embodiments, the backing structure 208 is further configured to reflect the acoustic energy in phase. In some embodiments, the backing structure 208 is further configured to spatially and temporally disperse unwanted acoustic reverberations in the backing structure 208. The backing structure 208 includes a dual layer de-matching backing 210. In some embodiments, the backing structure 208 is thermally conductive and electrically conductive. In some embodiments, a top portion 209 of the backing structure 208 is made from an electrically insulating material. In some embodiments, the top portion 209 of the backing structure 208 includes a layer made from AlN traversed by electrically conductive vias 236, each electrically conductive via 236 being aligned to a corresponding one of the plurality of piezoelectric regions 203 arrayed in one dimension. In some embodiments, the layer made from AlN layer has a front face, and the layer made from AlN layer is partially diced from the front face to enhance acoustic separation of adjacent ones of the plurality of piezoelectric regions 203 arrayed in one dimension.

The dual layer de-matching backing 210 includes a low acoustic impedance layer 212 and a high acoustic impedance layer 214. In some embodiments, the low impedance layer 212 and the high acoustic impedance layer 214 form a first dual layer de-matching backing 210 and the ultrasonic transducer includes a second dual layer de-matching backing 216. The second dual layer de-matching backing 216 includes a second low acoustic impedance layer 218 and a second high acoustic impedance layer 220.

The ultrasonic transducer 200 also includes a pre-assembled electrical circuit 234. The pre-assembled electrical circuit 234 is in electrical communication with the top portion 209 of the backing structure 208, such that it is in electrical communication with the piezoelectric material 202. In some embodiments, the pre-assembled electrical circuit 234 includes at least one of: a printed circuit board, an interposer, an integrated circuit and an application-specific integrated circuit.

In some embodiments, the ultrasonic transducer 200 includes a heat sink similar to the one having been previously described. The heat sink being in thermal contact with the backing structure 208. In some embodiments, the heat sink includes at least one channel. Such a channel is configured for receiving and circulating a heat transfer fluid therein. The heat transfer fluid may be a liquid, gaseous, or any mixtures thereof. In some embodiments, the heat sink is electrically insulated from the backing structure 208.

In some embodiments, the ultrasonic transducer 200 includes one or more electrodes electrically connected to the one-dimensional piezoelectric array 202 through the backing structure 208. The ultrasonic transducer 200 may include a control unit electrically connected to at least one of the one-dimensional piezoelectric array 202 and the backing structure 208.

As illustrated, each piezoelectric region 203 is separated one from another by gaps 238. The gaps 238 are electrically insulating and preferably also acoustically insulating. Similarly, in some embodiments, at least one of the low acoustic impedance layer 210 and the high acoustic impedance layer 212 may be diced into a first plurality of elements 240, separated one from another by a first set of gaps 242. Each one of the first set of gaps 242 being aligned with a corresponding one of the gaps 238 separating the piezoelectric regions 203. The first set of gaps 242 is electrically insulating and preferably also acoustically insulating. In some embodiments, at least one of the second low acoustic impedance layer 218 and the second high acoustic impedance layer 220 may be diced into a second plurality of elements 244, separated one from another by a second set of gaps 246. Each one the second set of gaps 246 is aligned with a corresponding one of the gaps 238 separating the piezoelectric regions 203. The second set of gaps 246 is electrically insulating and preferably also acoustically insulating. In some embodiments, the gaps 238, the first set of gaps 242 and the second set of gaps 246 are thermally conductive.

In some embodiments, the ultrasonic transducer 200 is operable at an operational frequency. This operational frequency is related to an operational wavelength $\lambda_o$. The low acoustic impedance layer 212, the high acoustic impedance layer 214, the second low acoustic impedance layer 218 and the second high acoustic impedance layer 220 each have a corresponding thickness of about $\lambda_o/4$ thick or odd multiples of $\lambda_o/4$.

In one embodiment, the one-dimensional piezoelectric array 202 is configured to be half wave resonant at the operational frequency.

In another embodiment, the ultrasonic transducer 202 includes a single de-matching layer 228 positioned between the one-dimensional piezoelectric array 202 and the backing structure 208. The single de-matching layer 228 is in acoustic communication with the one-dimensional piezoelectric array and the matching backing structure 208. The single de-matching layer 228 has a corresponding acoustic impedance relatively higher than an acoustic impedance of the one-dimensional piezoelectric array 202. The one-dimensional piezoelectric array 202 is configured to be quarter wave resonant at the operational frequency. In some embodiments, the one-dimensional piezoelectric array 202 has a resonant frequency associated to a resonant wavelength $\lambda_r$, and the single de-matching layer 228 has a thickness of less than $2\lambda_r/5$ thick with respect to the resonant frequency of the one-dimensional piezoelectric array 202. In some embodiments, the single de-matching layer 228 has a thickness ranging between about $\lambda_r/10$ and about $\lambda_r/20$. In some embodiments, the single de-matching layer 228 is made from tungsten.

In some embodiments, the one-dimensional piezoelectric array 202 includes pillars separated by kerfs. In some embodiments, the kerfs are filled with a composite filler. The composite filler may include particles of hafnium dioxide doped into epoxy. In some embodiments, the composite filler may in a 0 3 configuration. In some embodiments, the epoxy may be Epo-Tek® 301.

In some embodiments, the piezoelectric regions 203 consists of a piezoelectric layer.

In some embodiments, the ultrasonic transducer 200 includes a thermally conductive structure 230 in contact with the backing structure 208. In some embodiments, the thermally conductive structure 230 is electrically insulated from the backing structure 208. In some embodiments, the thermally conductive structure 230 is a layer made of AlN or a layer made of beryllium oxide. In some embodiments, the thermally conductive structure 230 extends on lateral portions of the backing structure 208.

In some embodiments, the ultrasonic transducer 200 includes a wear layer 232 having abrasion-resistant properties. In some embodiments, the wear layer 232 is made from titanium.

In some embodiments, the ultrasonic transducer 200 has a diameter of about 50 mm.

Example

Other embodiments of an ultrasonic transducer including a one-dimensional piezoelectric array will now be presented.

In some embodiments, there is provided a 1-D linear array having a single DLDB backing layer fully diced and electrically attached directly to a PCB, which allows for a relatively easy electrical interconnection of the array, and even a relatively direct application of an ASIC or high-density connector directly to the stack.

In some embodiments, there is provided a 16 element 1-D linear array having a single DLDB backing layer fully diced and electrically attached directly to a PCB. As it has been previously mentioned, such a configured allows for a relatively easy electrical interconnection of the array, and even a relatively direct application of an ASIC or high-density connector directly to the stack. The array may include a protective wear layer. This layer could alternatively be a lens or a matching layer, depending on the application.

Piezoelectric elements, each being separated from one another by a gap (or kerf) form the 1-D linear array. The array also includes a low acoustic impedance ¼ lambda layer, separated into elements with gaps between them, in line with the arrayed piezoelectric elements. Over the low acoustic impedance layer is provided a high acoustic impedance ¼ lambda layer, which can be made of tungsten. The high acoustic impedance layer is separated into elements with gaps between them, in line with the arrayed piezoelectric elements. The array is also provided with electrodes on PCB surfaces, a PCB and a via in printed circuit board connecting electrodes from one face to the opposite face.

In some embodiments, the elements and layers forming the one-dimensional array or the two-dimensional matric may be further separated into sub-elements to optimise acoustic properties, as will be understood by one skilled in the art. In some embodiments, the piezoelectric layer may be sub diced. In still other embodiments, the DLDB backing structure may be sub diced, and in still other embodiments, some layers of some the DLDB may be sub diced. It should be noted that these examples of arrayed transducers serve an illustrative purpose only, and should therefore not be considered limitative. More specifically, any methods of enhancing acoustic properties though sub dicing and manipulating aspect ratio (*e.g.,* by forming additional gaps) may be performed on the ultrasonic transducers (or components thereof) of the current disclosure. In addition, the DLBD backing configuration may be applied to these methods and techniques.

In some embodiments, there is provided a dual DLDB 16 element linear array having a laterally thermally continuous layer of the second (topmost) DLDB stack. The thermally conductive layer is AlN or could be beryllium oxide or another suitable thermally conductive electrically insulating material and contains electrically conductive vias to make connection to the elements of the transducer. This allows the array to be cooled from the edges, and electrically connected directly with a PCB for example. As one skilled in the art will understand, this trade-off between cooling area and the coverage of the PCB can be traded off depending on space and design needs.

In some embodiments, there is provided a dual DLDB 16 element linear array having a laterally thermally continuous layer of the second (topmost) DLDB stack. This array includes a protective wear layer. The layer could alternatively be a lens, or matching layer or layers depending on the application. The array also includes piezoelectric elements, each being separated from each other by a gap (or kerf) to form the 1-D linear array. The array includes a low acoustic impedance ¼ lambda layer, separated into elements with gaps between them, in line with the arrayed piezoelectric elements. and a high acoustic impedance ¼ lambda layer, which can be made of tungsten. The layer is separated into elements with gaps between them, in line with the arrayed piezoelectric elements. The array includes another low acoustic impedance ¼ lambda layer, separated into elements with gaps between them, in line with the arrayed piezoelectric element, and another high acoustic impedance ¼ lambda layer. The layer can be made from AlN and has no gaps, meaning that the layer is continuous. The layer provides lateral thermal conductivity along the array. Vertical electrical conductivity is provided by vias in the AlN layer. The vias in the AlN layer provide electrical communication between the vertically adjacent layers. The array also includes electrodes on PCB surfaces, a printed circuit board and a via printed in circuit board connecting electrodes from one face to the opposite face.

Embodiments of an ultrasonic transducer including a two-dimensional piezoelectric matrix will now be presented

### Ultrasonic transducers including a two-dimensional piezoelectric matrix

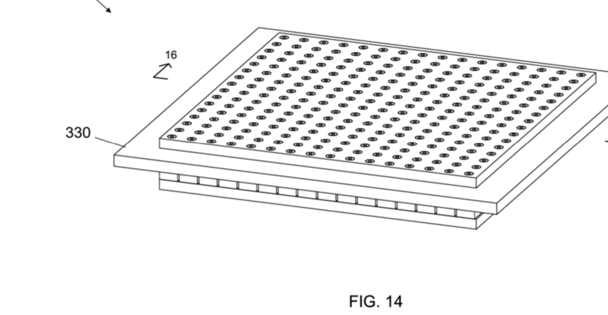

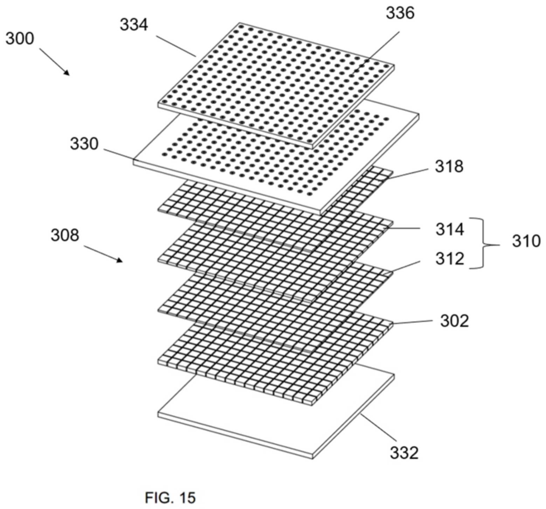

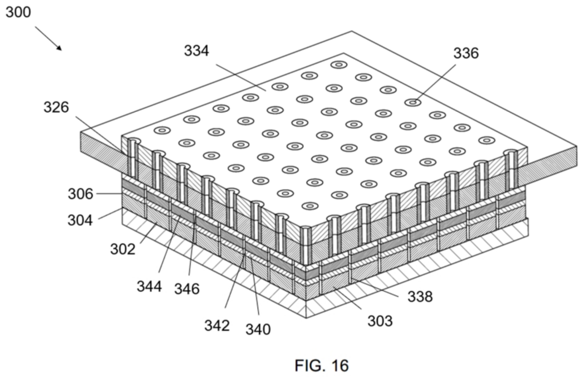

Now turning to Figures 14 to 16, there is illustrated an ultrasonic transducer 300.

The ultrasonic transducer 300 includes a two-dimensional piezoelectric matrix 302 having a front surface 304 and a back surface 306. The two-dimensional piezoelectric matrix 302 is configured to be in acoustic communication with a sample (not illustrated in the Figures). One skilled in the art would readily understand that while the following paragraphs make explicit reference to a 2D matrix, such a 2D structure may be embodied by an annular array having circular gaps symmetrically located with respect of the centre of the ultrasonic transducer. In fact, the 2D matrix could be embodied by any array shapes.

The ultrasonic transducer 300 also includes a backing structure 308 positioned at the back surface 306 of the two-dimensional piezoelectric matrix 302. The backing structure 308 is configured to reflect acoustic energy towards the front surface 304 of the two-dimensional piezoelectric matrix 302. In some embodiments, the backing structure 308 is further configured to reflect the acoustic energy in phase. In some embodiments, the backing structure 308 is further configured to spatially and temporally disperse unwanted acoustic reverberations in the backing structure 308. The backing structure 308 includes a dual layer de-matching backing 310. In some embodiments, the backing structure 308 is thermally conductive and electrically conductive. In some embodiments, a top portion 309 of the backing structure 308 is made from an electrically insulating material. In some embodiments, the top portion 309 of the backing structure 308 includes a layer made from AlN traversed by electrically conductive vias 336, each electrically conductive via 336 being aligned to a corresponding one of the plurality of piezoelectric regions 303. In some embodiments, the layer made from AlN layer has a front face, and the layer made from AlN layer is partially diced from the front face to enhance acoustic separation of adjacent ones of the plurality of piezoelectric regions 303.

The dual layer de-matching backing 310 includes a low acoustic impedance layer 312 and a high acoustic impedance layer 314. In some embodiments, the low impedance layer 312 and the high acoustic impedance layer 314 form a first dual layer de-matching backing 310 and the ultrasonic transducer includes a second dual layer de-matching backing 316. The second dual layer de-matching backing 316 includes a second low acoustic impedance layer 318 and a second high acoustic impedance layer 320.

The ultrasonic transducer 300 also includes a pre-assembled electrical circuit 334. The pre-assembled electrical circuit 334 is in electrical communication with the top portion 309 of the backing structure 308, such that it is in electrical communication with the piezoelectric material 302. In some embodiments, the pre-assembled electrical circuit 334 includes at least one of: a printed circuit board, an interposer, an integrated circuit and an application-specific integrated circuit.

In some embodiments, the ultrasonic transducer 300 includes a heat sink similar to the one having been previously described. The heat sink should be in thermal contact with the backing structure 308. In some embodiments, the heat sink includes at least one channel. Such a channel is configured for receiving and circulating a heat transfer fluid therein. The heat transfer fluid may be a liquid, gaseous, or any mixtures thereof. In some embodiments, the heat sink is electrically insulated from the backing structure 308.

In some embodiments, the ultrasonic transducer 300 includes one or more electrode electrically connected to the two-dimensional piezoelectric matrix 302 through the backing structure 308. The ultrasonic transducer 300 may include a control unit electrically connected to at least one of the two-dimensional piezoelectric matrix 302 and the backing structure 308.

As illustrated, each piezoelectric region 303 is separated one from another by gaps 338. The gaps 338 is electrically insulating and acoustically insulating. Similarly, in some embodiments, at least one of the low acoustic impedance layer 310 and the high acoustic impedance layer 312 may be diced into a first plurality of elements 340, separated one from another by a first set of gaps 342. Each one of the first set of gaps 342 being aligned with a corresponding one of the gaps 338 separating the piezoelectric regions 303. The first set of gaps 342 is electrically insulating and acoustically insulating. In some embodiments, at least one of the second low acoustic impedance layer 318 and the second high acoustic impedance layer 320 may be diced into a second plurality of elements 344, separated one from another by a second set of gaps 346. Each one the second set of gaps 346 is aligned with a corresponding one of the gaps 338 separating the piezoelectric regions 303. The second set of gaps 346 is electrically insulating and acoustically insulating. In some embodiments, the gaps 338, the first set of gaps 342 and the second set of gaps 346 are thermally conductive.

In some embodiments, the ultrasonic transducer 300 is operable at an operational frequency. This operational frequency is related to an operational wavelength $\lambda_o$. The low acoustic impedance layer 312, the high acoustic impedance layer 314, the second low acoustic impedance layer 318 and the second high acoustic impedance layer 320 each have a corresponding thickness of about $\lambda_o/4$ thick or odd multiples of $\lambda_o/4$.

In one embodiment, the two-dimensional piezoelectric matrix 302 is configured to be half wave resonant at the operational frequency.

In another embodiment, the ultrasonic transducer 300 includes a single de-matching layer 328 positioned between the two-dimensional piezoelectric matrix 302 and the backing structure 308. The single de-matching layer 328 is in acoustic communication with the two-dimensional piezoelectric matrix and the matching backing structure 308. The single de-matching layer 328 may have gaps aligned with the gaps formed in the piezoelectric matrix 302. The single de-matching layer 328 may be electrically conductive. The single de-matching layer 328 has a corresponding acoustic impedance relatively higher than an acoustic impedance of the two-dimensional piezoelectric matrix 302. The two-dimensional piezoelectric matrix 302 is configured to be quarter wave resonant at the operational frequency. In some embodiments, the two-dimensional piezoelectric matrix 302 has a resonant frequency associated to a resonant wavelength $\lambda_r$, and the single de-matching layer 328 has a thickness of less than $2\lambda_r/5$ thick with respect to the resonant frequency of the two-dimensional piezoelectric matrix 302. In some embodiments, the single de-matching layer 328 has a thickness ranging between about $\lambda_r/10$ and about $\lambda_r/20$. In some embodiments, the single de-matching layer 328 is made from tungsten.

In some embodiments, the two-dimensional piezoelectric matrix 302 includes pillars separated by kerfs. In some embodiments, the kerfs are filled with a composite filler. The composite filler may include particles of hafnium dioxide doped into epoxy. In some embodiments, the composite filler may in a 0 3 configuration. In some embodiments, the epoxy may be Epo-Tek® 301.

In some embodiments, the piezoelectric regions 303 consists of a piezoelectric layer.

In some embodiments, the ultrasonic transducer 300 includes a thermally conductive structure 330 in contact with the backing structure 308. In some embodiments, the thermally conductive structure 330 is electrically insulated from the backing structure 308. In some embodiments, the thermally conductive structure 330 is a layer made of AlN or a layer made of beryllium oxide. In some embodiments, the thermally conductive structure 330 extends on lateral portions of the backing structure 308.

In some embodiments, the ultrasonic transducer 300 includes a wear layer 332 having abrasion-resistant properties. In some embodiments, the wear layer 332 is made from titanium.

In some embodiments, the ultrasonic transducer 300 has a diameter of about 50 mm.

Examples

Other embodiments of an ultrasonic transducer including a two-dimensional piezoelectric matrix will now be presented.

In some embodiments, there is provided a 2-D matrix transducer having two DLDB stacks, the top layer of the second stack comprising a continuous thermally conductive layer of AlN having electrically conducive vias, corresponding to a 2D version of the 1D transducer previously described.

In some embodiments, there is provided a dual DLDB 16 x 16 element matrix array having a laterally thermally continuous layer of the second (topmost) DLDB stack. The matrix transducer includes a protective wear layer, which could be alternatively replaced by a lens, or a matching layer, or other acoustic structure depending on the application spanning the full area of the 2D transducer array. The matrix transducer includes piezoelectric elements separated from each other by a gap (or kerf) in two axes to form the 2-D linear array or matrix array. The matrix transducer includes a low acoustic impedance ¼ lambda layer, separated into elements with gaps between them in two axes, in line with the arrayed piezoelectric elements, and a high acoustic impedance ¼ lambda layer, which can be made from tungsten. The layer can be separated into elements with gaps between them in two axes, in line with the arrayed piezoelectric elements. The layers and define a first DLDB stack. The matrix transducer also includes a second DLDB stack. The second DLDB stack includes a low acoustic impedance ¼ lambda layer, separated into elements with gaps between them in two axes, in line with the arrayed piezoelectric elements, and a high acoustic impedance ¼ lambda layer. The layer is generally continuous and is made from AlN. In this context, the expression "continuous" refers to the fact that the stack has no gaps and provides lateral thermal conductivity along both axes of the array. Vertical electrical conductivity is provided by electrically conductive vias in the AlN layer. This layer is particularly useful in maintaining equal temperature in the interior of the 2D array with respect to the edge elements.

### Low and high acoustic impedance layers for ultrasonic transducers

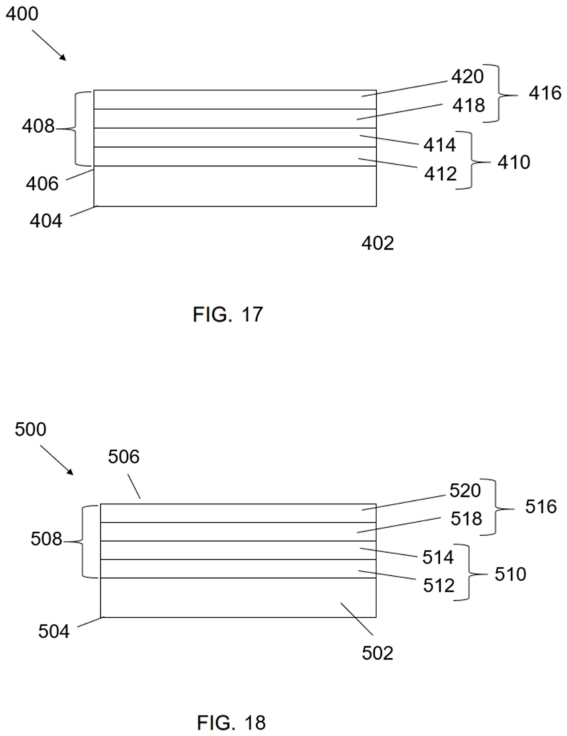

Now turning to Figure 17, there is shown an ultrasonic transducer 400. The ultrasonic transducer 400 includes a piezoelectric material 402 having a front surface 404 and a back surface 406. The piezoelectric material 402 is configured to be in acoustic communication with a sample (not illustrated in Figure 17). The ultrasonic transducer includes a backing structure 408 positioned at the back surface 406 of the piezoelectric material 402 and configured to reflect acoustic energy towards the front surface 404 of the piezoelectric material 402. The backing structure 408 including a first dual layer de-matching backing 410 and a second dual layer de-matching backing 416.

The first dual layer de-matching backing 410 includes a first low acoustic impedance layer 412 and a first high acoustic impedance layer 414. The second dual layer de-matching backing 416 is connected to the first dual layer de-matching backing 410. The second dual layer de-matching backing 416 includes a second low acoustic impedance layer 418 and a second high acoustic impedance layer 420.

It will be noted that the ultrasonic transducer 400 may include one or more of the optional features having been described with respect to the ultrasonic transducer 100, ultrasonic transducer 200 and ultrasonic transducer 300.

Now turning to Figure 18, there is shown an ultrasonic transducer 500 having a sample-contacting portion 504 and a back portion 506. The back portion 506 is opposed to the sample contacting portion 504. The ultrasonic transducer 500 includes a piezoelectric material 502 configured to be in acoustic communication with a sample (not illustrated in Figure 18). The ultrasonic transducer 500 includes a backing structure 508 in acoustic communication with the piezoelectric material 502. The backing structure 508 is configured to reflect acoustic energy towards the sample-contacting portion 504 and away from the back portion 506 of the ultrasonic transducer 500. The backing structure 508 includes a low acoustic impedance layer 512 and a high acoustic impedance layer 514. In some embodiments, the low acoustic impedance layer 512 and the high acoustic impedance layer 514 form a first dual layer de-matching backing 510 and the ultrasonic transducer includes a second dual layer de-matching backing 516. The second dual layer de-matching backing 516 includes a second low acoustic impedance layer 518 and a second high acoustic impedance layer 520.

In some embodiments, the piezoelectric material 502 is diced into a plurality of piezoelectric regions, separated one from another by gaps, the gaps being electrically insulating and acoustically insulating. At least one of the low acoustic impedance layer 510 and the high acoustic impedance layer 512 may be diced into a first plurality of elements, separated one from another by a first set of gaps. Each one of the first set of gaps may be aligned with a corresponding one of the gaps separating the piezoelectric regions. The first set of gaps is electrically insulating and acoustically insulating. Similarly, at least one of the second low acoustic impedance layer 518 and the second high acoustic impedance layer 520 is diced into a second plurality of elements, separated one from another by a second set of gaps. Each one of the second set of gaps is aligned with a corresponding one of the gaps separating the piezoelectric regions. The second set of gaps is electrically insulating and acoustically insulating.

It will be noted that the ultrasonic transducer 500 may include one or more of the optional features having been described with respect to the ultrasonic transducer 100, ultrasonic transducer 200, ultrasonic transducer 300 and ultrasonic transducer 400.

Now that different embodiments of an ultrasonic transducer have been described, the performances of some of these embodiments will be discussed, and more specifically in terms of the results that may be obtained using the ultrasonic transducers which have been herein described.

### Examples of results

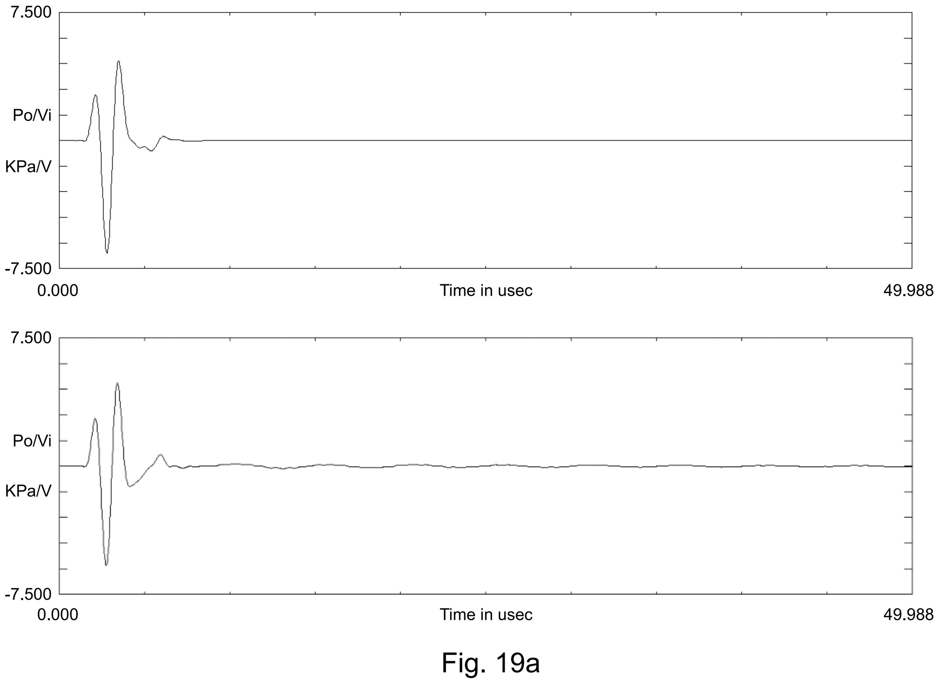

Figure 19A is a comparison of existing air-backed material specific transducer (above) transmitting into Titanium at 680 kHz with no heat sink (see PCT/CA2019/051046, the content of which is herein incorporated by reference) and a dual DLDB material specific transducer as disclosed herein, operating at the same conditions. Typical slight reduction in bandwidth due to the additional in-phase reflections produced by the DLDB can be seen, with a reduction from 105% -6 dB bandwidth for the air backed transducer to 91% for the DLDB version, and a modest drop in efficiency of ~ 1 dB compared to the state-of-the-art air backing design.

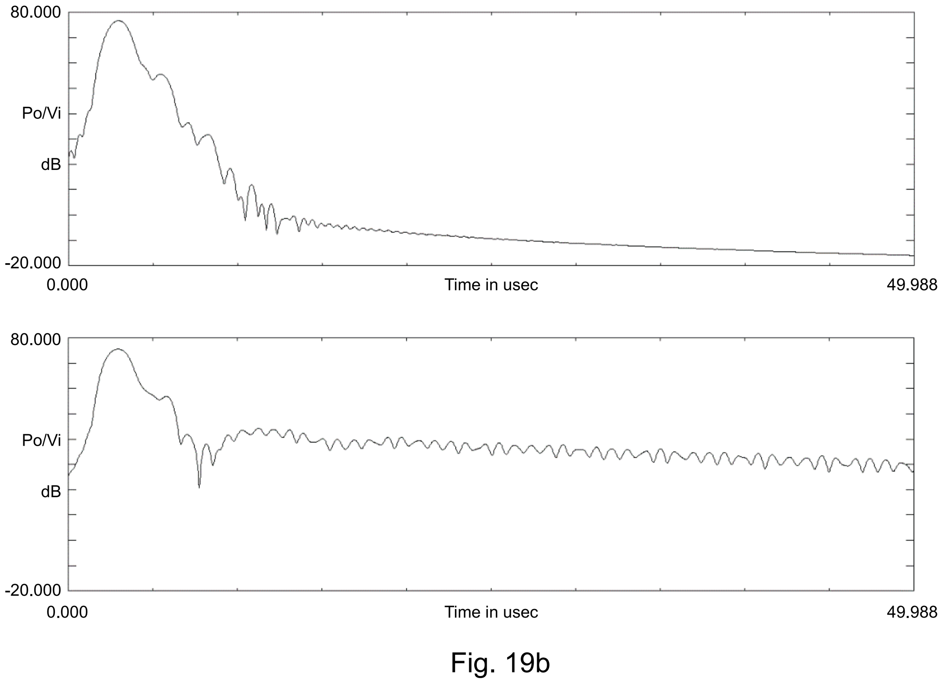

Figure 19b is a comparison of the logarithm of the envelope of the existing air-backed material specific transducer transmitting into titanium (top) and the current technology (bottom), exemplified in the dual DLDB having been described, transmitting into titanium. One skilled in the art will note the exponential decay of reflected energy from the backing spread out over time in the DLDB. The energy in the tail of the transmitted wave is approximately 40 dB higher than for the air backed case. While this is not desirable on its own, it is however desirable when considering the case when attaching a heatsink to the back of the stack as it has been previously presented.

Figure 20 is a comparison of three 680 kHz material specific transducers having copper heatsinks attached to the back surface of the piezoelectric stack: an air backed material specific transducer with a heatsink directly bonded to the back surface of the piezoelectric element of the transducer (top); one existing method of bonding a heat sink to the piezoelectric element of the transducer with acoustically lossy thermally conductive material such as alumina filled silicone foam (middle); and material specific transducer having dual DLDB stacks and heatsink directly bonded to top layer of the DLDB stacks (bottom). As it can be seen, the dual DLDB equipped design does not suffer from the internal reflections seen in the typical state of the art transducers when a thermal heat sink is applied to the stack. In addition, due to the acoustic energy lost to the heat sink in the first two graphs, the top transducer output is reduced by 4 dB, and the middle design is reduced by ~3 dB, while the dual DLDB equipped transducer does not experience any loss in sensitivity or bandwidth. It is to be noted that in the existing approach of using a thermally conductive but acoustically lossy layer to bond or couple the heat sink to the piezoelectric stack, a relatively significant compromise on both acoustic performance and thermal conductivity is generally required to get a useful device, while the thermal conductivity of the DLDB equipped design is more than an order of magnitude higher than that of the middle transducer design while also exhibiting no reverberation artifacts.

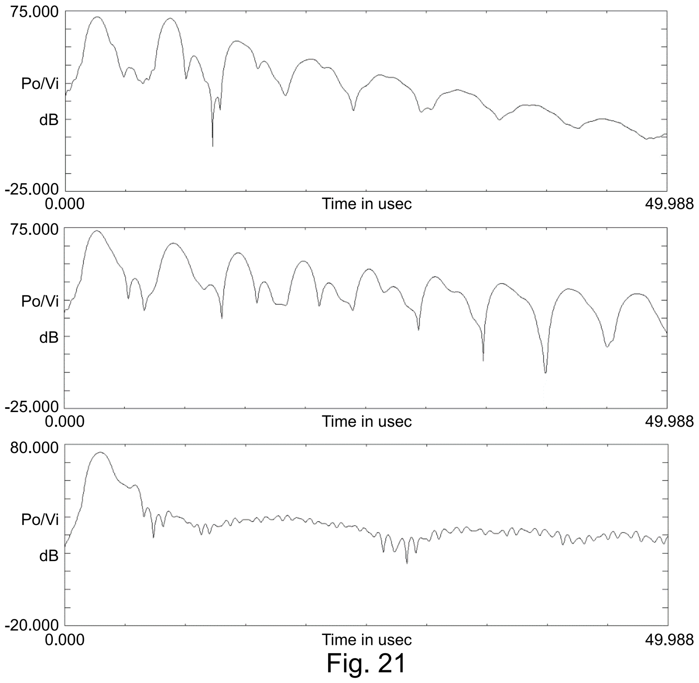

Figure 21 is an illustration of the log scale of the envelope of the waveforms shown in Figure 20. It is to be noted that there is substantial reduction in unwanted reverberation within the DLDB equipped transducer (bottom) when a heat sink is applied to the back of the stack. Also note that the SNR for the DLDB equipped stack (bottom) is still over 35 dB, while the SNR for the existing stacks (top and middle) are less than 3 dB, and are essentially, unusable.

Figure 22a is a comparison of 10 MHz single element transducers, pulse echo (two way) pulse response with a ¼ lambda resonant piezoelectric element and an about 1/10th lambda thick tungsten de-matching layer backing (DML) comparison of the effect of adding a single DLDB backing to the back of the DML. It is to be noted that there is almost no change to the performance of the transducer. More particularly, the insertion loss differs by less than 0.5 dB and the bandwidth is similar.

Figure 22b is the logarithm of the envelope comparison of the waveforms of the 10 MHz single element transducers shown in Figure 22a. It is to be noted that the effect of the DLDB to redistribute the reflected energy from the backing at a low level and spread out over time. This effect is flat when seen in pulse echo (two way) signals. The SNR for the DLDB stack (bottom) is limited to about 47dB compared to over 70 dB for the existing DML stack (top), while at least 60 dB SNR is often required for medical imaging applications, with image processing this may be acceptable for even demanding medical imaging applications. For therapeutic medical applications, as well as NDT and other industrial applications, the DLDB equipped stack will generally be acceptable. It is to be noted that the length of the ringing tail is improved by the DLDB equipped stack.

Figure 23a is a comparison of the effects of adding a 3 mm thick copper heat sink directly to the back of the 10 MHz acoustic stacks from Figure 22a: the DML backing bonded directly to the 3 mm copper heatsink develops multiple internal reflections which result in unwanted artifacts in imaging or inspection applications (top) and the DLDB equipped stack experiences no measurable changes when the heat sink is bonded directly to the surface of the acoustic stack (bottom).

Figure 23b is a comparison of the log envelopes of the pulse echo waveforms of the 10 MHz transducer shown in Figure 23a. It is to be noted that the addition of the copper heatsink to the back of the DML equipped existing transducer (top) renders it essentially unusable for most applications, with SNR of less than 3 dB, while the transducer equipped with the present technology exhibits over 50dB of SNR when a copper heat sink or similar device, such as a PCB is directly bonded to the proximal layer of the DLDB stack.

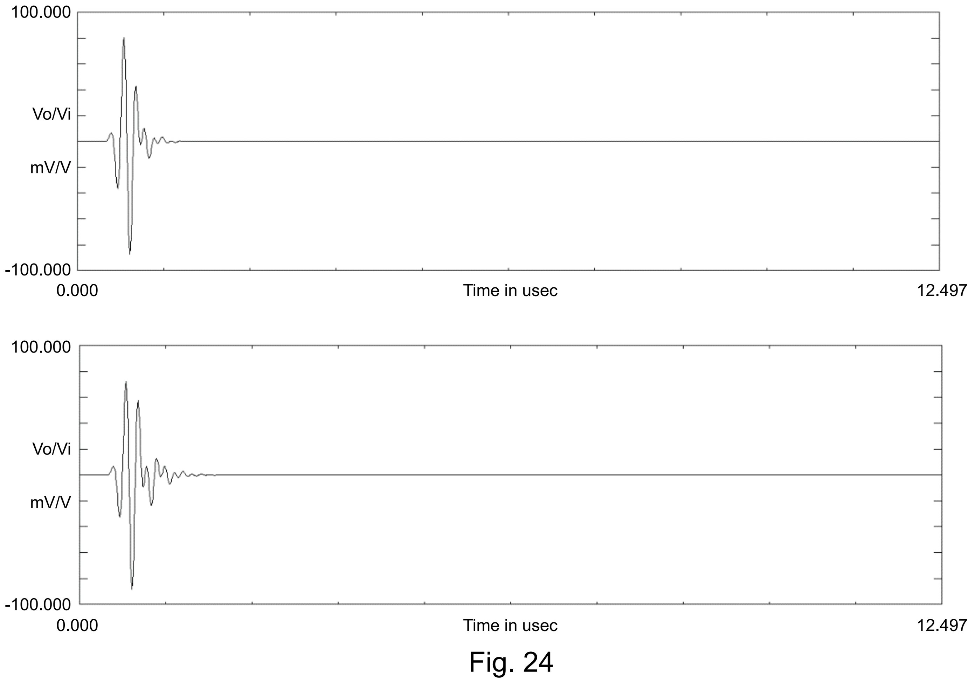

Figure 24 is a comparison of a pulse echo response from a material specific 5 MHz 1D array element 550 um by 5 mm with a PZT composite piezoelectric element matched to transmit into titanium with dual DLDB backing compared to one with air backing. Minimal difference is seen between the air backed transducer (top) and the DLDB equipped transducer (bottom), apart from a minor pulse length increase seen in the DLDB equipped stack.

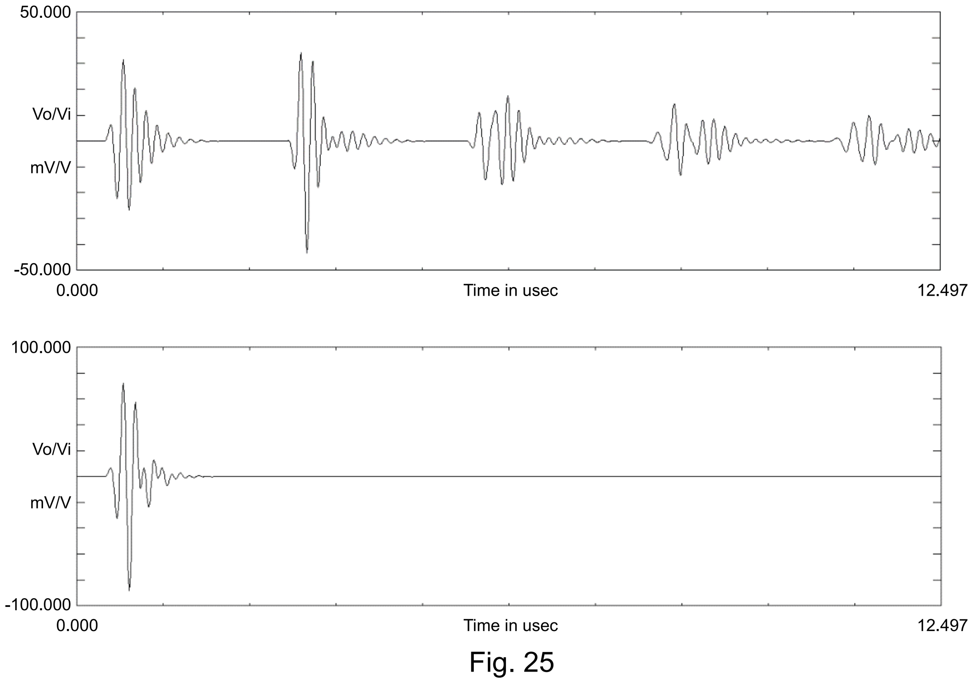

Figure 25 is a comparison of the pulse echo response of the transducer elements described in Figure 24 with the addition of a 6 mm copper heatsink directly bonded to the back of the acoustic stacks. It is to be noted the significant internal reverberation artifacts seen when the heat sink is bonded to the back of the air backed transducer (top), while the DLDB equipped acoustic stack is unaffected by the addition of the heat sink (bottom). More particularly, the bottom figure corresponds to the one-dimensional piezoelectric array having been described. It is to be noted that soldering wires, bonding or soldering PCBs or ceramic interpores to the back of the DLDB elements also results in no deterioration of the quality of the acoustic performance of the transducer elements, paving the way to relatively simplified array transducer designs.

### Additional theoretical considerations

Now that different embodiments of the technology and performances have been described, further theoretical details will now be presented. As has been previously mentioned, the backing structure can include one or more dual layer de-matching backing (DLDB) stacks, and each DLDB includes two layers, which can be for example and without being limitative, in direct acoustic communication. In some implementations, the layers can be adhesively bonded together. Each layer of a DLDB stack can be both between about 1/10th lambda and ½ lambda thick, and in some embodiments about ¼ lambda thick. In some embodiments, the ultrasonic transducer includes two DLDB stacks, *i.e.,* four layers, including the graphite disc, the tungsten disc, the graphite disc, and the copper disc. These four layers define the two pairs of dual layer de-matching backings (DLDB) working in conjunction to reflect a significant portion or virtually nearly all the acoustic energy emitted in the proximal direction from the piezoelectric composite disc resulting in virtually all of the acoustic energy emitted by the piezoelectric composite disc being transmitted out the distal face of the titanium disc. In these embodiments, the titanium disc acts as an outer wear layer and the main point of ultrasonic coupling to the intended titanium load into which the transducer will transmit. It should be noted however, that transducers equipped with DLDB stacks can also function with any number of output configurations know or not yet known in the art, such as lenses, matching layers, delay lines, and the like. Acoustic pressure reflections generated at the interface of materials having differing acoustic impedance are calculated according to the reflection coefficient R given by the following equation:

$$R = \frac{Z_2 - Z_1}{Z_2 + Z_1} \tag{1}$$

While transmitted pressure from one material to the other is calculated from the Transmission coefficient T, according the following:

$$T = \frac{2Z_2}{Z_2 + Z_1} \tag{2}$$

Where $Z_1$ is the acoustic impedance of the medium from which the acoustic wave is travelling and $Z_2$ is the acoustic impedance of the medium into which the acoustic wave is travelling. Based on these equations, one skilled in the art will understand that the sign of the reflection coefficient will be positive when acoustic waves are travelling from a low impedance to a high acoustic impedance, and negative when the acoustic wave is travelling from high to low acoustic impedance mediums. The transmission coefficient is always positive. The arrangement of layers in the DLDB effectively ensures the reflection of almost all of the acoustic energy, in phase, towards the distal face of the titanium wear layer within the first layer of the DLDB. Furthermore, the presence of alternating, highly acoustically mis-matched ¼ wave layers of the DLDB results in each layer resonating and redistributing the acoustic energy that enters that layer at very low amplitude over a very long timeframe. The result is to spread the unwanted backing reflections over time at a low amplitude. The initial reflection occurring between the piezoelectric element and the first low acoustic impedance layer of the DLDB, or between the back of a DML, and the first low acoustic impedance layer of the DLDB, has a significant impact on the overall efficiency of the transducer. Care is generally taken to maximize the acoustic impedance mismatch between the piezoelectric element and the first low acoustic impedance layer of the DLDB in the case of a ½ wave resonant transducer. This effect is less severe when using a DML equipped ¼ lambda transducer design, but still impacts the overall performance of the DLDB.

Using material such as graphite or silver-plated hollow glass spheres, or low density conductive epoxy, or for example a composite of graphite and epoxy, or a composite of a low acoustic impedance metal such as magnesium and epoxy as the first layer of the DLDB allows for both thermal and electrical conductivity to be maintained throughout the DLDB stack while maintaining a high initial reflection coefficient between the piezoelectric element and the first layer of the DLDB. Using the exemplary materials listed above, acoustic impedance in the range of 1.5 to 6 MR are readily obtained, along with varying degrees of electrical and thermal conductivity as required. It is not necessary however, nor should it be taken as limiting of the scope of the present description, that the layers of the DLDB be made from electrically or thermally conducting material. There may be applications when some or all of the layers of one or more DLDB stack are desirable to be made from thermally insulating or electrically insulating materials. One example of a non- conductive DLDB stack is an approximately ¼ wave thick layer of Rexolite (cross linked polystyrene) bonded to ~ ¼ wave thick layer of alumina. In addition, layers of a DLDB stack could be made from hybrid materials, such as AlN with electrically conductive vias. The subsequent second layer of the DLDB, should be chosen to maximize the acoustic impedance mismatch between itself, and the low acoustic impedance layer. Materials such as tungsten metal, molybdenum metal, tungsten carbide, and other high acoustic impedance materials offer a good combination of high acoustic impedance, good thermal conductivity, and good electrical conductivity. It should be noted that many other materials exist which can be tailored to specific applications and still fall within the scope of this the present technology.

The effect of the DLDB stack can be explained through the following simplified reasoning. A first step is to consider the function in an infinitely narrow bandwidth at the centre frequency of the transducer. A second step is to consider each layer to be exactly ¼ lambda at the centre frequency. One skilled in the art would readily understand that this is not the case in the actual device, which is relatively broadband each layer of each DLDB having been optimized to extend the effective bandwidth of the device. However, for the purpose of making the overall function of the DLDB stacks clear, the narrowband case is considered and detailed so as to treat all DLDB layers to be ¼ of the wavelength of the centre frequency. The effect of stacking ¼ wave layers of highly contrasting acoustic impedances adjacent to the piezoelectric composite layer in the case of ½ lambda resonant piezoelectric designs, or adjacent to the de-matching layer in the case of ¼ lambda resonant piezoelectric designs, is to create a series of strongly resonant layers that are also highly acoustically isolated from each other due to the high (e.g., preferably over 80%) reflection coefficient at each boundary. An explanation of the effect of the backing is more easily affected by way of an example, and with reference to Figure 13. Using the embodiments of the acoustic stack having been herein disclosed, one can see that acoustic wave going from the piezoelectric layer into the first graphite layer first undergoes a 180-degree phase change (negative reflection coefficient) and 69% reflection back into the piezoelectric layer, the remaining 31% of the acoustic wave is transmitted into the graphite layer. Once into the graphite layer, the acoustic wave reverberates within the graphite layer such that it is in phase every trip across the layer, the layer being ¼ wave resonant. The wave experiences 90% reflection at the boundary to the tungsten layer, and 69% reflection at the boundary to the piezoelectric layer. One skilled in the art will see that the reverberating acoustic wave within the graphite layer is in phase when being reflected back into the piezoelectric layer, only after an odd number of reflections from the proximal wall of the graphite layer, first, 3rd, 5th reflections and so on. One will also note that the acoustic wave within the graphite layer is out of phase after an even number of reflections from the proximal wall of the graphite layer, second, 4th, 6th, reflections and so on. One will also note that the acoustic pressure wave transmitted from the graphite layer into the adjacent tungsten layer is in phase after an even number of reflections from the distal wall of the graphite layer, such that the 0th, second, 4th,... reflections will travel into the tungsten layer, experiencing constructive interference within the tungsten layer, but the first, 3rd, 5th, ... reflections will experience destructive interference within the tungsten layer. A first order approximation of the combined effect of each DLDB is to spread the energy of each acoustic pulse over time, each reverberation decaying exponentially in amplitude. The result is a very low level exponentially decaying acoustic "tail" added to the impulse response of the transducer as shown clearly in Figures 19a and 19b. While it is generally undesirable to add a decaying ring down to the impulse response of an ultrasonic transducer, the DLDB compensates for this negative effect in two ways. Firstly, the ring down is very low level, typically -35dB in one-way applications, and -50 dB in two-way cases. Secondly, the impulse response of the DLDB equipped transducer is generally unaffected by the addition of desirable devices such as heat sinks and electrical connections to the transducer stack. It may be noted by one skilled in the art that the impulse response of the transducer, which is equipped with a directly bonded heat sink or PCB or other similar structure in substantial acoustic communication with the backing or a portion of the proximal face of the piezoelectric material or the proximal face of the de-matching layer of the transducer is typically improved by interposing the DLDB stack therebetween by between about -20 dB and -30 dB, due to the efficient in phase reflectivity of the first layer of the DLDB. Similarly, the energy travelling to the back of the DLDB stack is transmitted via the resonant layers, also spread out over time and diminished in amplitude, so that the amplitude of waves reaching the proximal face of the DLDB pairs are very small and spread out over time. Thus, heat sinks, PCBs and/or the like may be bonded or otherwise adjacent and in contact to the proximal face of the final DLDB stack with little or no effect to the acoustic performance of the stack. If Figure 13 were adapted to present a wideband case, in-phase reflections going to the front of the ultrasonic transducer could be observed, since out-of-phase reflections would happen at other frequencies. Of note, the out-of-phase reflections would interfere in a random, and often destructive, manner with each other. As such, the out-of-phase reflections would therefore be of less significance than the in-phase reflections that occur at the designed operating frequency.

The effect of the spreading of acoustic energy in time within the DLDB layers can be seen clearly when observing the log of the envelope of the 680 kHz liquid cooled transducer, shown in Figures 19b and 21.

The effect of this highly effective isolation in a relatively small space is to enable the direct connection of heat sinks, PCBs, soldered wires, ASICS and other desirable structures to the acoustic stack of a transducer. One skilled in the art will appreciate the benefit of being able to electrically connect, for example by soldering, a PCB directly to the acoustic stack of an array, for example an imaging array making electrical interconnection via an off the shelf high density electrical connector pre-soldered to the PCB. Furthermore, one skilled in the art will appreciate the relative ease with which an ASIC could be directly applied to a 1 or 2D array without compromising the acoustic performance by using an anisotropic conductive tape for example.

The embodiments of the technology which have been herein described are associated with some advantages that will now be presented. In general, the motivation for using the DLDB instead of an existing low acoustic impedance absorbing backing or a simple DML layer is to enable the direct connection of electrical components, heat sinks, or other desirable structures to the acoustic stack in a minimum of space (and/or a limited space). In addition, the DLDB may make assembly of transducers possible in more space confined applications, such as, for example and without being limitative, catheter-based transducers due to the small space required by the DLDB.

In the embodiments wherein the DLDB pair include graphite and tungsten, up to 97% of the acoustic energy can be reflected in phase back out the front of the transducer before it reaches the back wall of the tungsten layer. When the transducer includes a second pair of DLDB layers, it can reduce the acoustic pressure reaching the back of the second tungsten layer by over 70 dB, and any reflections or reverberations generated at that surface due to a PCB or heatsink is further reduced as it travels back through the DLDB stacks. The practical result is good and, in some instances, nearly complete acoustic isolation of electrical interconnection and/or heatsinks from the acoustic stack, even when the second DLDB utilizes a lower acoustic impedance second layer such as copper or aluminum nitride for electrical or thermal properties.

It has to be noted that high and low acoustic impedance layers of the DLDB can be made from solid materials, or can be made from electrically conductive acoustic composites such as diced graphite, sputtered after dicing and filled with epoxy to form a highly electrically and thermally conductive layer having acoustic impedance of between about 2.5 MR and about 4 MR, or silver plated micro balloons mixed into epoxy for example, and without being limitative.

The electrical properties of the backing can be useful in that an electrically conductive backing allows direct attachment of PCBs, ASICs or soldered or wired joints with now detrimental effect to the acoustic performance of the device.

The thermal properties of the backing can also be useful, in that the thermally conductive backing materials used in the DLDB allow highly efficient heat sinking of the piezoelectric element which is increasing critical with the development of advanced relaxor materials such as PMN-PT and related materials.

It is to be noted that, from a theoretical standpoint, there is generally no limit to the frequency range over which the DLDB backing will work. From a practical point of view, it can be used from at least 10 kHz, or 100 kHz in some circumstances, and perhaps to as high as 50 MHz or 100 MHz with sufficient process control.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and non-restrictive. Accordingly, while specific embodiments have been illustrated and described, numerous modifications come to mind without significantly departing from the scope defined in the current description.

**Claims**

1. An ultrasonic transducer, comprising:

   a one-dimensional piezoelectric array having a front surface and a back surface, the one-dimensional piezoelectric array being configured to be in acoustic communication with a sample and comprising a plurality of piezoelectric regions arrayed in one dimension;
   a backing structure positioned at the back surface of the one-dimensional piezoelectric array and configured to reflect acoustic energy towards the front surface of the one-dimensional piezoelectric array, the backing structure comprising a dual layer de-matching backing, the dual layer de-matching backing comprising a low acoustic impedance layer and a high acoustic impedance layer; and
   a pre-assembled electrical circuit, the pre-assembled electrical circuit being in electrical communication with a top portion of the backing structure, such that it is in electrical communication with the one-dimensional piezoelectric array.

2. The ultrasonic transducer of claim 1, further comprising a second dual layer de-matching backing, the second dual layer de-matching backing comprising a second low acoustic impedance layer and a second high acoustic impedance layer.

3. The ultrasonic transducer of claim 1, further comprising a heat sink in thermal contact with the backing structure.

4. The ultrasonic transducer of claim 3, wherein the heat sink comprises at least one channel, the channel being configured for receiving and circulating a heat transfer fluid therein.

5. The ultrasonic transducer of claim 4, wherein the heat transfer fluid is a liquid.

6. The ultrasonic transducer of claim 1, further comprising a thermally conductive structure in contact with the backing structure.

7. The ultrasonic transducer of claim 6, wherein the thermally conductive structure is electrically insulated from the backing structure.

8. The ultrasonic transducer of claim 6, wherein the thermally conductive structure extends on lateral portions of the backing structure.

9. An ultrasonic transducer, comprising:

   a two-dimensional piezoelectric matrix having a front surface and a back surface, the two-dimensional piezoelectric matrix being configured to be in acoustic communication with a sample;
   a backing structure positioned at the back surface of the one-dimensional piezoelectric matrix and configured to reflect acoustic energy towards the front surface of the two-dimensional piezoelectric matrix, the backing structure comprising a dual layer de-matching backing, the dual layer de-matching backing comprising a low acoustic impedance layer and a high acoustic impedance layer; and
   a pre-assembled electrical circuit, the pre-assembled electrical circuit being in electrical communication with a top portion of the backing structure, such that it is in electrical communication with the two-dimensional piezoelectric matrix.

10. The ultrasonic transducer of claim 9, further comprising a second dual layer de-matching backing, the second dual layer de-matching backing comprising a second low acoustic impedance layer and a second high acoustic impedance layer.

11. The ultrasonic transducer of claim 10, wherein:

    the ultrasonic transducer is operable at an operational frequency, the operational frequency being related to an operational wavelength ($\lambda_o$); and
    the low acoustic impedance layer, the high acoustic impedance layer, the second low acoustic impedance layer and the second high acoustic impedance layer each have a corresponding thickness of about $\lambda_o/4$ thick or odd multiples of $\lambda_o/4$.

12. The ultrasonic transducer of claim 9, wherein the two-dimensional piezoelectric matrix is configured to be half wave resonant at the operational frequency.

13. The ultrasonic transducer of claim 9, wherein the backing structure is further configured to reflect the acoustic energy in phase.

14. The ultrasonic transducer of claim 9, wherein the backing structure is further configured to spatially and temporally disperse unwanted acoustic reverberations in the backing structure.

15. An ultrasonic transducer, comprising:

    a piezoelectric material having a front surface and a back surface, the piezoelectric material being configured to be in acoustic communication with a sample; and
    a backing structure positioned at the back surface of the piezoelectric material and configured to reflect acoustic energy towards the front surface of the piezoelectric material, the backing structure comprising:

       a first dual layer de-matching backing, the first dual layer de-matching backing comprising a first low acoustic impedance layer and a first high acoustic impedance layer, the first low acoustic impedance layer being made of a material having a first acoustic impedance and the first high acoustic impedance layer being made from a material having a second acoustic impedance; and
       a second dual layer de-matching backing connected to the first dual layer de-matching backing, the second dual layer de-matching backing comprising a second low acoustic impedance layer and a second high acoustic impedance layer, the second low acoustic impedance layer being made of a material having a third acoustic impedance and the second high acoustic impedance layer being made from a material having a fourth acoustic impedance,
       wherein the first acoustic impedance is equal to the third acoustic impedance, and the second acoustic impedance is different from the fourth acoustic impedance.

FIG. 1a

FIG. 1b

108

120 118 114 112 128

116

102

110

106

104

132

## FIG. 1c

100

122

135

120

118

102

133

132

114

112

128

## FIG. 1d

FIG. 2

FIG. 3

100

122

FIG. 4

108

6

6

**FIG. 5**

108

114

112

128

110

102

106

104

**FIG. 6**

FIG. 7

FIG. 8

FIG. 9

200

11,12

11,12

**FIG. 10**

200

230

206
204
202 218
214
212
232

**FIG. 11**

FIG. 12

FIG. 13

FIG. 14

FIG. 15

FIG. 16

400

420 } 416
418

408

414 } 410
412

406

404

402

FIG. 17

500

506

520 } 516
518

508

514 } 510
512

504

502

FIG. 18

Fig. 19a

Fig. 19b

Fig. 20

Fig. 21

Fig. 22a

Fig. 22b

Fig. 23a

Fig. 23b

Fig. 24

Fig. 25

EP 4 660 590 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2019051046 W